# EUROPÄISCHE PATENTANMELDUNG

(11) **EP 3 289 932 A1**
(43) Veröffentlichungstag der Anmeldung: **07.03.2018**
(21) Anmeldenummer: 17001072.2
(22) Anmeldetag: 23.06.2017
(51) Int. Cl.: A47G 23/06, H05B 3/26

(54) **EINLEGBARES WIDERSTANDS-HEIZELEMENT**

(30) Priorität: 28.06.2016 DE 102016007920
(71) Anmelder: Maurer, Sabrina, 35614 Asslar-Werdorf (DE)
(72) Erfinder: Günter, Martin, 35630 Ehringshausen (DE); Maurer, Jürgen, 35614 Asslar-Werdorf (DE)

(57) **Zusammenfassung**

Der Erfindung lag die Aufgabe zu Grunde, ein Verfahren zur Herstellung, sowie heizbarer Gegenstand einer einlegbaren Widerstands-Heizplatte (7), die zum größten Teil aus elektrisch leitfähigem Kunststoff bzw. aus mit Additiven gefüllten Spezialcompounds besteht, wobei diese in ihrer Funktion eine PTC-Charakteristik aufweisen, die in Baugruppen vorzugsweise in Serviertabletts eingebracht und mit Bajonett oder Klickverschluss, in vorgesehene Aufwulstungen, unterhalb des Tablettkorpus, befestigt sind. Weiter ist eine Heizplatte als Latent-Wärme-Element konzipiert worden.

## Beschreibung

### Anspruch 1:

Der Erfindung lag die Aufgabe zu Grunde, eine einlegbare und auswechselbare Widerstands-Heizplatte aus leitfähigem Kunststoff bzw. aus Spezialcompounds, mit elektrischen Kontakten an ihrem Umfang, die in den unterschiedlichsten Baugruppen, Konstruktionen, Gerätschaften kontaktierbar sind, dabei insbesondere in ein Serviertablett zu integrieren. Sowie auch eine auswechselbare Widerstands-Heizplatte aus verschiedenen mehrschichtigen, verpressten Materialien, wie z.B. SMC, GFK, Hartfaser, oder ähnlichen, jedoch jeweils mit integrierter Heizeinlage (aus Az. 10 2014 108 553.1, auf die Bezug genommen wird), in unterschiedlichsten konstruktiven Aufbauten was die Wirkungsweise betrifft, wobei auch die Heizplatte auf einfache Weise an unterschiedliche Heizzonen-Formen und Heizleistungen anpassbar und über eine PTC-ähnliche Charakteristik, Temperatur, Temperaturmessung oder Aufheizzeiten regeln kann und ein Verfahren zur Temperaturregelung und Aufheizzeiten auch mit der Möglichkeit über ein eingespritztes bzw. eingepresstes, eingearbeitetes RFID-System (RFID = Abk. für Radio Frequency Identification) allgemeine Daten zur Vereinfachung von technischen und logistischen Anforderungen eines Serviertabletts, bis hin zu einer kompletten Speisenverteilung darstellen kann.

Einlegbare Widerstands-Heizplatte nach Anspruch 1, dadurch gekennzeichnet dass, die Möglichkeit einer kompletten Fertigung aus polymeren Phasenwechselmaterialien, für eine Heizplatte, in Verbindung mit einer Heizeinlage (aus Az. 10 2014 108 553.1, auf die Bezug genommen wird), als sogenannte externe Heizquelle, die in ein Serviertablett unterseitig in den Aufwulstungen des Korpus, einlegbare und durch Bajonett oder Klickverschluss zu befestigen, integriert ist und somit als Latent-Wärme-Element zum Einsatz kommt, geschaffen werden. Wobei es unerheblich ist, ob das Serviertablett mit Netz-oder Schutz-Kleinspannung betrieben wird.

Ebenfalls zu Grunde, lag die Aufgabe der Erfindung, die nach Anspruch 1, dadurch gekennzeichnet ist, dass einlegbare Widerstands-Heizplatten, die in unterschiedlichen Baugruppen, Konstruktionen und Gerätschaften z.B. auch in Serviertabletts integrierbar und auswechselbar sind, dabei keine lokale Spannungsrisse und Ausbeulungen bei den Heizzyklen, in einer Fläche (z.B. Tablettfläche) erzeugt werden. Die Heizplatte sollte in einfacher Weise an unterschiedliche Heizzonen-Formen und Heizleistungen anpassbar und über PTC-ähnliche Charakteristik eine Temperatur, Temperaturmessung oder Aufheizzeit regelbar sein.

Diese Aufgabe wird bei den einlegbaren Widerstands-Heizplatten für die unterschiedlichsten Baugruppen, Konstruktionen, Gerätschaften, dabei insbesondere in ein Serviertablett kontaktierbar und zu integrieren sind, wird nach den eingangs genannten Art erfindungsgemäß durch die Merkmale des Anspruchs 1 gelöst. Vorteilhafte Ausgestaltungen ergeben sich aus den Merkmalen der Unteransprüche 1-10.

Die vorliegende Erfindung betrifft eine einlegbare und auswechselbare Widerstands-Heizplatte aus leitfähigem Kunststoff, sowie aus mehrschichtigem verpressten SMC Material und ein Verfahren zur Temperaturregelung dadurch gekennzeichnet ist dass, die Heizplatten aus leitfähigem Kunststoff mit elektrischen Kontakten am ihrem Umfang, die in einem Serviertablett das aus mehrschichtigen gepressten SMC-Material besteht, kontaktierbar ist, anzugeben.

Als Ausgestaltung ist es auch die Möglichkeit gegeben, das die einlegbaren und auswechselbaren Heizplatten in zweischaligen Serviertabletts, die in den verschiedensten Materialien wie z.B. PP, ABS, oder sonstigen thermischen Kunststoffen, die tiefgezogen oder im Spritzguss-Verfahren verarbeitet werden können. Wobei die Ober und Unterschalen im Nachgang mit Isolationsschaum oder mit anderen Isolationsmaterialien gefüllt werden und anschließend ringsum verschweißt, verklebt oder anderweitig verschlossen werden.

Für die vorliegende Erfindung, soll die Serviertablett-Heizeinlage **Az.** 10 2014 108 553.1 in einer Ausgestaltung, aus dem Erteilungsbeschluss vom 28.04.2016, für ein Serviertablett aus mehrschichtigem verpressten SMC Material, Verwendung finden. Ausgestaltungen werden im Folgenden noch näher beschrieben.

Im Gegensatz zu der in der Schrift Az. 10 2014 108 553.1 beschriebenen Art eine Heizeinlage direkt in eine Serviertablett-Fläche einzubringen, werden bei der vorliegenden Erfindung einlegbare und durch Bajonett oder Klickverschluss zu befestigende Heizplatte aus leifähigem Kunststoff in eigens dafür, am unteren Tablettkorpus angearbeitete Aufwulstungen eingelegt und fixiert werden. Dadurch, dass kein gesondertes Heizelement in die Platte eingelegt wird, sondern komplett aus einem Spezialcompound besteht, liegt der Vorteil darin, dass sowohl bei dieser Heizplatte, als auch bei den verpressten Heizplatten aus SMC-Kunststoff mit einer Widerstandsheizeinlage in Sandwich-Bauweise ein Einlegen der Heizeinlage bei dem Produktionsprozess wesentlich einfacher, Produktionssicherer und somit auch letztendlich enorm Kostengünstiger gefertigt werden kann.

Ein weiterer Vorteil der vorliegenden Erfindung liegt auch in der Funktionssicherheit bzw. Herstellung einer kleineren separaten Heizplatte, denn das Positionsgenaue Einlegen von Heizeinlagen, Kontakten, sowie Positionieren und verlegen von innenliegenden Anschlussdrähten zu den am Umfang befindlichen Steuer und Regelkontakten, ist Prozessgenauer d.h. auch verrutsch sicherer und gegen zusammenschieben der Heizeinlage, um sogenannte Hot Spots zu verhindern, die zu einer komplett unbrauchbaren Heizplatte führen würden.

PTC-Elemente sind auch elektronische Komponenten aus einem polykristallinen Keramikmaterial auf Titanbasis, bzw. aus einer Legierung, mit ihren gewünschten Verwendungseigenschaftenentsprechen bestehen.

Als weiterer Vorteil muss angemerkt werden, dass die Heizplatten bei Defekt auf einfache Art und ohne größeren Kostenfaktor, austauschbar sind. Ebenfalls können diese, wenn es gewünscht wird, durch andere Platten mit den verschiedensten Funktionen z.B. externe Kühlplatten oder Elemente ausgetauscht werden.

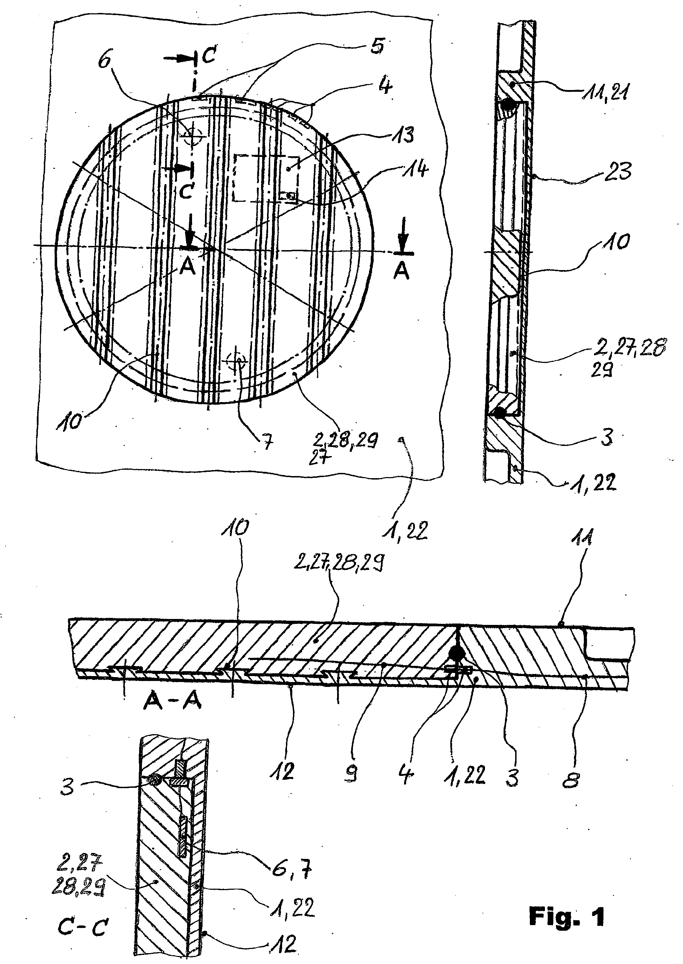

Bedingt durch die Aufwulstungen (Fig. 1, Pos. 8) unterhalb des Serviertabletts aus mehrschichtigem verpressten SMC Material (Fig. 1, Pos. 1) wird die einlegbare und durch Bajonett oder Klickverschluss zu befestigende Heizplatte aus leifähigem Kunststoff (Fig. 1, Pos. 2), wobei dieses in seiner Funktion eine PTC-Charakteristik aufweist, eingelegt und fixiert. Hierbei bleibt die Tablettoberfläche, die als Aufstellfläche für jegliche Speisengefäße dient, vollkommen frei von Einlegeritzen, Absätzen, Vertiefungen oder sonstigen Einschneidungen, um die strengen und notwendigen Auflagen der Hygienevorschriften zu erfüllen. Auch sind Spannungen und Rissbildungen in der Tablettoberfläche Weitgehens ausgeschlossen, weil die Heizeinlagen in kleinere Flächen (Heizplatten) integriert werden.

Trotz Aufwulstungen an der Unterseite des Tablettkorpus, aus gepresstem SMC-Material, ist ein Stapeln der so hergestellten Serviertabletts ohne weiteres möglich, was natürlich auch für die logistischen Belange sehr wichtig ist. Bei den zweischaligen aus PP, oder anderen thermischen Kunststoffen hergestellten Serviertabletts, haben die Aufwulstungen, weil sie sich im Inneren ihrer Zweischaligkeit befinden, d.h. an der Unterseite der Oberschale, keinen negativen Einfluss. Trotzdem sind die Tabletts stapelbar.

In einer Ausgestaltung wird in die Aufwulstungen (Fig. 1, Pos. 8) unterhalb des Serviertabletts aus mehrschichtigem verpressten SMC Material (Fig. 1, Pos. 1) die einlegbare und durch Bajonett oder Klickverschluss zu befestigende Heizplatte, die auch aus mehrschichtigem verpressten SMC Material besteht, sowohl auch aus alternativen Materialien wie z.B. GFK, Kunstharzverbunden oder ähnlichen bestehen kann, die in Verbindung mit der Widerstandsheizeinlage (Fig. 1, Pos.), aus Az. 10 2014 108 553.1 Verwendung finden soll, in Sandwich-Bauweise eingelegt. Durch diese einlegbare komplette Heizplatte bleibt hierbei auch die dann beheizte Tablettoberfläche, die als Aufstellfläche für jegliche Speisengefäße dient, vollkommen frei von Einlegeritzen, Absätzen, Vertiefungen oder sonstigen Einschneidungen, um die strengen und notwendigen Auflagen der Hygienevorschriften sowie Reinigungsvorschriften der Lebensmittelverordnung zu erfüllen.

Erfindungsgemäß ist die einlegbare Widerstands-Heizplatte, in verschiedenen Formen, komplett aus leitfähigem Kunststoff, wobei dieses in seiner Funktion eine PTC-ähnliche Charakteristik aufweist, sowie aus Kostengründen in Spritzguss-Technik ausgeführt ist. Zudem wird mittels eingespritzten Anschlüssen eine integrierte Regeltechnik z.B. Temperatursteuerung bzw. Temperaturabschaltung, oder Aufheizzeit, geregelt. Zusatzoptionen wie z.B. Auslesen von Daten, Programmiermöglichkeiten, durch RFID-Technik sind, was die Hardware betrifft, vorbereitet. Die einlegbare Widerstands-Heizplatte ist auf einfache Art mit wenigen Handgriffen, mittels Bajonett, Klickverschluss oder ähnl. in verschiedene Baugruppen oder sonstige speziellen konstruktiven Elementen, insbesondere an oder in ein Servier-Tablett-Korpus, adaptierbar und auswechselbar.

Die im Spritzgussverfahren hergestellte Widerstands-Heizplatte, kann als kreisrunde Scheibe oder auch als jegliche erdenkliche Freiform ausgebildet sein.

Desweiteren wurde vorgesehen, dass die einlegbaren Heizplatten noch aus einem Werkstoff hergestellt werden, der in der Lage ist, eine überschaubare Möglichkeit, auch im Hinblick auf die Fertigungskosten, sowie auf eine gewisse Speicherfähigkeit der erzeugten Wärmeenergie, zu bieten.

Für die vorliegende Erfindung soll also die Möglichkeit einer kompletten Fertigung aus polymeren Phasenwechselmaterialien, für eine Heizplatte, in Verbindung mit einer Heizeinlage **(aus Az.** 10 2014 108 553.1**,** als sogenannte externe Heizquelle, die in ein Serviertablett unterseitig in den Aufwulstungen des Korpus, einlegbare und durch Bajonett oder Klickverschluss zu befestigen, integriert ist und somit als Latent-Wärme-Element zum Einsatz kommt, geschaffen werden. Wobei es unerheblich ist, ob das Serviertablett mit Netz- oder Schutz-Kleinspannung betrieben wird.

Als Ausgestaltung der vorliegenden Erfindung, ist als Vorteil zu sehen, dass auch in eine vorgesehene Ausnehmung/Aufwulstung unterhalb von einem Servier-Tablettkorpus oder in einem zweischaligen isolierten Servier-Tablett, statt einer Heizplatte aus leifähigem Kunststoff, oder einer Heizplatte aus mehrschichtigem,- verpresstem SMC-Material mit innenliegendem Heizelement in Verbindung mit der Heizeinlage aus **Az.** 10 2014 108 553.1**,** ein Kühlelement/Kühlplatte die auf dem Prinzip eines Peltier-Elementes oder Heatpipes-Verfahren basiert und ausgeführt sind, jedoch aber auch mittels Bajonett, Klickverschluss oder ähnl. adaptierbar sind.

Als weitere Ausgestaltung wird auch das umgekehrte Prinzip eines Latentwärmespeicher mit PCM (engl. phase change material), sogenanntes Phasenwechselmaterial) zum Kühlen einer einlegbaren Platte vorgesehen.

Ebenso lag auch der Erfindung zu Grunde, dass ein RFID-System eingesetzt werden soll, was ohne Beeinträchtigung seiner Funktionen, in eine einlegbare Heizplatte aus leitfähigem Spezial-Compound, sowie aus mehrschichtigem SMC-Material oder ähnlichen Werkstoffen, integriert werden kann.

RFID bedeutet "Radio Frequency Identification" und steht für die berührungslose Erkennung von Objekten per Funk. Befindet sich ein Objekt mit angebrachtem RFID-Chip (Transponder) in Reichweite eines Lesegerätes, wird eine eindeutige Kennung übertragen. Ist ein Gegenstand identifiziert, kann auf ihn individuell reagiert werden. Ein passiver Transponder benötigt dabei keine eigene Energiequelle, hierdurch können Kosten und Größe niedrig gehalten werden.

Seit den frühen 60er Jahren ist das RFID-System schon bekannt und mittlerweile auch industriell weiter Entwickelt worden. Für die vorliegende Erfindung war es jedoch unabdingbar entwicklungsmäßig das System und sein Funktionsspektrum zu erweitern bzw. zu ändern und für die speziellen Anforderungen und daraus notwendigen Fertigungstechniken vorzubereiten.

Hierbei wurde ein spezielles Zwischengehäuse konzipiert was den eigentlichen Transponder mit Chip und Antennenspule in den Fertigungsprozessen z.B. Spritzgiessen oder Pressen gegen

Beschädigungen schützen und doch seine Funktionen was allgemeine Datenausgabe, Sendeleistung, Magnetfeldstärke, Frequenz usw. betreffen, sicher stellen.

Für die vorliegenden Erfindung war es abgesehen von der Entwicklung eines Zwischengehäuses zur sicheren Einbettung für die Fertigungsprozesse unter anderem noch nötig, dass ein Zusammenspiel zwischen den Faktoren Reichweite, Magnetfeldstärke, Frequenz gefunden werden musste, weil der Transponder, der in das aus leitfähigem Kunststoff, Spezialcompound oder aus mehrschichtigem gepresstem SMC-Material bestehenden Heizplatten, im Spritzguss-oder Press-Verfahren eingearbeitet werden soll, dabei jedoch beachtet werden muss, dass eine bestimmte Leistung für eine sichere und lückenlose Datenübertragung benötigt wird.

Es war wichtig festzustellen, dass in jedem Fall darüber Klarheit herrschen muss, mit welchen Reichweiten gearbeitet werden muss, denn danach richtet sich auch die Größe der Magnetfelder und Sendeleistung. Daneben ist auch das zu benutzende Frequenzband sehr wichtig. Alle Faktoren zusammen sind letztendlich auch für die Kosten verantwortlich.

Wegen der Magnetfelder muss bei größeren Reichweiten darauf geachtet werden, dass sich zwischen Transponder und Lesegerät keine Materialien befinden, die eine Kommunikation verfälschen können, wie zum Beispiel Metall oder Wasser.

Ein weiterer Faktor, der einen Einfluss auf die Reichweite eines Transponders hat, ist das Magnetfeld selbst. Im Moment gibt es beim RFID-System zwei grundsätzliche Möglichkeiten, nämlich ein induktives Nahfeld, das magnetisch erzeugt wird oder ein elektromagnetisch erzeugtes Fernfeld. Je nachdem mit welchem Feld das RFID-System arbeitet, desto höher beziehungsweise niedriger kann auch die Entfernung zwischen Transponder und Lesegerät sein.

Die Reichweiten bei dem System Remote Coupling betragen bis zu 1 m, der Betrieb erfolgt bei Sendefrequenzen zwischen 100 und 145 kHz, 6,75 MHz, 13,56 MHz und 27,125 MHz. Die Datenübertragung wird bei fast allen Remote-Systemen durch induktive Kopplung erreicht. Etwa 85-95 % aller verkauften RFID-Systeme gehören zu den induktiv gekoppelten Systemen.

Daneben spielt natürlich auch das benutzte Frequenzband genau so eine Rolle wie die Sendestärke des Transponders. Die Sendestärke hängt dabei meist davon ab, wie der Transponder mit Energie versorgt wird, was wiederum Auswirkungen auf die Größe des Transponders hat.

Dadurch, dass es bei der vorliegenden Erfindung nicht wie in den meisten Fällen nötig ist, Abstriche bei der Reichweite zu machen, da es in der Praxis, durch große Reichweiten, zu vielen Probleme gekommen ist, denn im vorliegenden Thema war es eher notwendig, nicht auf Reichweite, sondern auf Leistung ohne Fehlerquellen bei der Datenausgabe zu achten. Theoretisch könnte ein RFID-Transponder aber über Strecken bis zu einem Kilometer, in Sonderfällen auch mehr, ausgelesen werden und wahrscheinlich werden diese Reichweiten mit fortschreitender Entwicklung der RFID-Systeme noch größer werden. Allerdings müssen dann auch Möglichkeiten gefunden werden, die heute noch vorhandenen auftretenden Probleme bei höheren Reichweiten zu beheben. Die Energieversorgung des Transponders erfolgt passiv, d.h. zum Betrieb des Chips ist die übertragene Energie aus dem Magnetfeld an das Lesegerät ausreichend.

Man unterscheidet hierbei RFID-Systeme, bei denen die Transponder ohne eigene Stromversorgung auskommen (passive Systeme), sowie Transponder mit eigener Stromquelle (aktive Systeme). Die Energieversorgung bei passiven Systemen erfolgt durch induktive Kopplung. Hierbei wird von der Antennenspule des Lesegerätes ein starkes, hochfrequentes elektromagnetisches Feld erzeugt. Im Transponder befindet sich ein Schwingkreis, der auf dieselbe Frequenz abgeglichen ist.

Nähert sich der Transponder nun dem Wechselfeld, wird über dessen Spule Energie in den Schwingkreis eingekoppelt, die für den Betrieb des Mikrochips genutzt wird. Steht genügend Energie zur Verfügung, sendet die Sendeelektronik des Transponders den Inhalt des Datenspeichers über die Antenne an das Lesegerät.

Disk-Transponder werden in der Praxis am häufigsten verwendet und eignen sich für ein breites Anwendungsspektrum.

Die Bezugnahme der Schrift **Az.** 10 2014108 553.1**,** soll nochmal in Auszügen dargelegt werden. Somit ist sie auch als Stand der Technik anzusehen.

### Serviertablett-Heizeinlage, Serviertablett mit einer Serviertablett-Heizeinlage und Verfahren mit Temperaturregelung eines Serviertabletts.

Die Erfindung betrifft eine Serviertablett-Heizeinlage mit elektrischen Kontakten am Außenrand des Tabletts.

Serviertabletts sind in unterschiedlicher Ausgestaltung bekannt. Insbesondere sind Serviertabletts ausgeschichtet verpressten Kunststofffolien bekannt. Sie bestehen üblicherweise aus mehreren übereinander liegend miteinander fließverpressten SMC-Folien (SMC =Sheet Molding, Compound) in einer Schichtdicke von jeweils 2,8 bis 3,6 mm. Das Material kann mit einem geringen Reaktionsschwund verarbeitet werden und ist auch bei größeren lokalen Temperaturunterschieden formstabil.

Aus der Druckschrift DE 10119 104 A1 ist es bekannt, am Tablett als Heizmittel eine elektrische Heizplatte anzuordnen. Eine solche Heizplatte muss in eine entsprechende Aussparung in der Tablettfläche eingesetzt werden. Aufgrund thermischer Spannungen können Ritzen an den Übergangsrändern entstehen. Es ist auch bekannt, in solche Serviertabletts eine Heizeinlage zu integrieren, um auf dem Tablett stehende Speisenbehälter zu erwärmen.

Aus der Gebrauchsmuster-Anmeldung DE 20 2013 011 699 U1 ist ein Serviertablett mit einer durchgehend ebenen Aufstellfläche bekannt, in die mindestens eine lokal begrenzte, über einen Heizleiter als Heizelement elektrisch erwärm bare Heizzone integriert ist, wobei die Heizleiter mit elektrischen Kontakten am Außenrand des Tabletts verbunden sind. Die Heizzonen können in unterschiedlichen Flächenformen dargestellt sein. In die Heizzonen können auch Temperatur-Sensoren zur Steuerung der zugeführten Heizenergie integriert sein.

Aus der Druckschrift DE 42 31 341 A1 ist ein Serviertablett bekannt, das aus einer oberen und einer unteren schlagzähen Kunststoffschale besteht, deren Zwischenraum mit einem Kunststoffschaum ausgefüllt ist. In die obere Kunststoffschale sind Aufnahmen für Speisengeschirre eingearbeitet, wobei die Aufnahmen mit elektrischen Kontaktflächen zur Übertragung von elektrischer Heizenergie in speziell ausgebildete Speisengeschirre versehen sind.

Aus der Druckschrift US 6 521 873 B1 ist eine Heizeinlage für eine Wärmedecke mit elektrischen Kontakten am Außenrand bekannt. Die Heizeinlage besteht aus einem Graphit-Faserbündel, das mit einer thermisch leitenden Kunststoffumhüllung versehen und auf einer flexiblen, faserbasierten Schicht mittels eines Fadens in Form einer Heizleiterstruktur befestigt ist.

Aus der Druckschrift US 2011/0 278 280 A1 ist ein Warmhaltesystem Kontakten am Rand des Warmhaltesystems verbunden sind. Der Heizleiter besteht aus einem elektrisch leitenden, verzwirnten Faserbündel, das auf einem Vlies-Material befestigt und in die Bodenplatte eingepresst ist.

Aus den Druckschriften US 5 093 556 A und DE 27 58 805 A1 sind Vorrichtungen zum Erwärmen von Speisen bekannt, die in Behältern auf einem Serviertablett angeordnet sind. Die Serviertabletts weisen in ihrem Innern eine Schaumstoffisolierung zur Verhinderung von Wärmeverlusten auf.

Aus der Druckschrift DE 10 2004 011 514 A1 ist ein elektrisches Heizelement bekannt, das einen Faden mit einer Vielzahl von elektrischen Leitern aufweist. Die elektrischen Leiter bestehen aus einem fadenförmigen Kern aus Kunststoff, der von einer metallenen Umhüllung umgeben ist. Mehrere solcher Leiter können zu einem Zwirn verdreht werden.

Aus der Druckschrift DE 10 2006 017 732 A1 ist ein leitfähiges textiles Flächengebilde zur Verwendung in Kraftfahrzeugen bekannt. Die elektrisch oder optisch leitfähigen Filamente des Flächengebildes können als Heizleiter, als Temperatursensor, als Druckerfassungssensor oder als Antenne geeignet sein.

Aus der Druckschrift WO 2007/099 019 A1 ist ein Heizleiter für Textilien bekannt, der aus einer Anzahl elektrisch gegeneinander isolierter Filamente besteht. Die einzelnen Filamente sind mit einem Glasüberzug zur elektrischen Isolierung versehen.

In das Filamentbündel können auch nicht isolierte Filamente eingefügt sein. Die Filamente des Bündels können in sich verdreht oder parallel zueinander ausgerichtet und von einer äußeren Umhüllung zusammengefasst sein.

Der Erfindung liegt die Aufgabe zugrunde, eine Serviertablett- Heizeinlage anzugeben, die in unterschiedliche Konstruktionen von Serviertabletts integrierbar ist, ohne lokale Spannungsrisse und Verwerfungen in der Tablettfläche zu erzeugen. Die Heizeinlage sollte
in einfacher Weise an unterschiedliche Heizzonen-Formen und Heizleistungen anpassbar und über eine Temperaturmessung in der Temperatur regelbar sein.

Diese Aufgabe wird bei einer Serviertablett-Heizeinlage der eingangs genannten Art erfindungsgemäß durch die gekennzeichneten Merkmale des Anspruches 1 gelöst. Vorteilhafte Ausgestaltungen ergeben sich aus den Merkmalen der Unteransprüche 2 bis 21. Die Aufgabe wird weiterhin mit einem Serviertablett nach dem Anspruch 26 gelöst. Besondere Serviertablettausgestaltungen ergeben sich aus den Merkmalen der Ansprüche 23 bis 25. Ein Verfahren zur Temperaturregelung ist im Anspruch 27 angegeben.

Durch das Fixieren der Heizleiter auf einem Vlies, insbesondere durch Aufnähen, wird eine flächige Heizeinlage geschaffen, die an die Unterseite einer Serviertablett-Schale angeklebt oder als Zwischenlage beim Verpressen von SMC-Kunststofffolien in diese eingelegt werden kann.

Die Heizleiter bestehen dabei mit Vorteil aus mehreren zu einer Litze verzwirnten Filamenten. Als Filamente werden dünne Drähte oder leitende Fasern bezeichnet, die der Litze eine hohe Flexibilität geben, so dass diese in Form unterschiedlicher Heizleiter-Strukturen auf dem Vlies fixiert werden können. Die Enden der Heizleiter können dabei an vorbereitete Kontakte am Außenrand des Tabletts herangeführt und mit diesen verbunden werden.
Das Vlies mit den Heizleitern kann als Zwischenlage bei einem aus SMC-Folien verpressten Serviertablett in einer Dicke hergestellt werden, die von den abdeckenden Materialschichten des Tabletts beim Verpressen vollständig in das SMC-Material eingeschlossen werden kann.

Zur Herstellung eines größeren Querschnitts des Heizleiters können mehrere Litzen zu einer Gesamtlitze verzwirnt sein. Eine Heizeinlage mit dieser Heizleiter-Ausgestaltung ist insbesondere zum Fixieren an der Unterseite einer Serviertablett-Schale geeignet, die nachfolgend noch ausgeschäumt wird.

Um den Querschnitt der Heizleiter-Litze beim Verpressen oder Ausschäumen nicht breitzudrücken ist es zweckmäßig, dass die Litze mit einer umhüllenden Beschichtung zur Stabilisierung des Querschnitts versehen wird. Für diese Beschichtung ist ein Material zu wählen, das einerseits mechanisch und thermisch stabil und andererseits einen guten Wärmeübergang ermöglicht, wie z.B. PP/PU/PE/PTF-Kunststoff.

Die die Litze bildenden Filamente werden vorzugsweise miteinander verzwirnt, so dass die gegenseitige Verdrillung der Filamente auch bei offenen Enden der Litze erhalten bleibt. Verbleibende Zwischenräume zwischen den verzwirnten Filamenten werden vorzugsweise mit einem elektrisch leitenden Pulver, wie Carbon oder Graphit aufgefüllt.

Die bereits erwähnte umhüllende Beschichtung der Litze wird zweckmäßigerweise nach dem Einbringen des Pulvers aufgebracht, um zusätzlich ein Herausfallen des Pulvers beim Verarbeiten der Litze zu vermeiden. Die ummantelte Litze mit Einschluss des Pulvers bildet einen einheitlichen Querschnitt zur Stromleitung und Erwärmung der Filamente.

Mit Vorteil wird in die Litze mindestens ein Filament mit elektrisch isolierender Ummantelung eingefügt und mit den übrigen Filamenten verzwirnt. Die elektrische Isolierung soll dabei eine gute Wärmeleitfähigkeit aufweisen. Die Filamente mit elektrischer Isolierung können aber auch als Seele einer Litze vorgesehen sein, um die herum die Litze mit den übrigen Filamenten verzwirnt ist.

Die elektrisch isolierten und die nicht isolierten Filamente der Litze werden an den Enden der Litze zu getrennten Gruppen zusammengefasst und mit getrennten Kontakten am Außenrand des Tabletts verbunden. Die gegeneinander elektrisch nicht isolierten Filamente der Litze werden bestromt und erwärmen sich dabei. Sie bilden den eigentlichen Heizleiter. Die dagegen elektrisch isolierten Filamente der Litze werden über ihre gesamte Länge mit erwärmt und verändern dadurch ihren ohmschen Widerstand. Die Widerstandsänderung kann an den jeweiligen Kontakten gemessen und als Temperatur-Steuersignal genutzt werden.

Das mindestens eine elektrisch isolierte Filament zur Temperaturmessung kann auch außen auf die Umhüllung der Heizleiter-Litze gewickelt sein. Dazu wird er vorteilhaftmit zur Verzwirnungsrichtung gegenläufiger Wickelrichtung aufgebracht, um Ungleichmäßigkeiten im Querschnitt der reinen Heizleiter-Litze überbrücken zu können.

Die Filamente der Litze können durch Kohlenstofffasern gebildet werden, bestehen vorzugsweise im Wesentlichen aber aus einer Silber Kupfer-Legierung oder einer Edelstahl-Kupfer-Legierung, in die Dotierungen zur Verbesserung der Heizleistung eingebracht sein können. Es ist auch möglich, Filamente unterschiedlichen Materials miteinander zu verzwirnen.

Die Einzelfilamente der Litze besitzen vorzugsweise einen Durchmesser von 5 bis 120 um Aus den dünneren Filamenten werden vorzugsweise Litzen mit bis zu 250 Einzelfilamenten, aus den dickeren Drähten Litzen mit bis zu 70 Einzelfilamenten hergestellt. Litzen aus einer Anzahl dünnerer Einzelfilamente werden insbesondere zur Belegung von Heizzonen- Strukturen kleineren Durchmessers und Litzen aus einer Anzahl dicker Einzelfilamente zur Belegung von Heizzonen-Strukturen größeren Durchmesser eingesetzt.

Die Anzahl und die Durchmesser der Einzelfilamente in einer Heizleiter- Litze beeinflussen die Geometrie der Legestruktur der Litze auf dem Vlies. Vorzugsweise ist ein Abstand von 3 bis 4,5 mm zwischen den Heizleiter-Litzen vorzusehen. Vorzugsweise ist die Legestruktur der Heizleiter-Litzen mäanderförmig in einer Kreisfläche. Es sind aber auch rechteckige und dreieckige Flächenformen möglich. Bei einer mäanderförmigen Verlegung ist eine kreuzungsfreie Rückführung der Heizleiter-Litze aus der gebildeten Heizzone-Struktur heraus möglich, insbesondere auch bei konzentrisch zueinander liegenden, getrennt ansteuerbaren Heizzonen-Strukturen.

Bei einer mäanderförmigen Legestruktur sind die Heizleiter an bestimmten Stellen in mit einem kleinen Biegeradius parallel zum hinführenden Heizleiter an diesem zurückzuführen. Zur Erzeugung eines kleinen Biegeradius muss der Heizleiter eine ausreichende Flexibilität aufweisen, die durch die Anzahl und die Dicke der Einzelfilamente in der Litze beeinflusst wird.

Demgegenüber hat eine spiralförmige Legestruktur der Heizleiter-Litze auf dem Vlies Vorteile. Allerdings muss das im Innern der Spirale liegende Ende der Litze durch das Vlies hindurch in eine weitere Zwischenschicht eingebettet werden, in der die sichere Rückführung zu den Kontakten ohne Kontaktierung mit den die Heizzonen-Struktur bildenden Heizleitern erfolgen kann.

Als Vlies wird vorzugsweise ein Glasfasergitter-Gewebe verwendet, das gut in ein anderes glasfaserverstärktes Material durch Verpressen oder Ausschäumen eingelagert werden kann. Es ist aber auch möglich, ein Vlies aus einer Naturfaser, z.B. Flachs, zu verwenden. Die obere oder untere Seite des mit dem Heizleiter bestückten Vlies können mit einer Haftschicht versehen sein, über die eine unmittelbare Lokalisierung an der Unterseite einer geeigneten Serviertablett-Schale möglich ist.

Es hat sich herausgestellt, dass auch eine nachträgliche Ausschäumung oder Auffüllung eines Hohlraumes durch Aufquellen unter dem z.B. angeklebten Vlies die gegenseitige Lage der Heizleiter zueinander auf dem Vlies nicht verändert.

Zur Sicherung der Heizeinlage gegen eine Überhitzung ist es vorteilhaft, auf dem Vlies in einem Randbereich des von dem Heizleiter gebildeten Strukturmusters einen thermischen

Überlastschalter, z.B. Bimetallschalter, zu fixieren und als Unterbrecherschalter für die Bestromung des Heizleiters in den Heizleiter einzufügen. Zusätzlich kann auf dem Vlies innerhalb des von den Heizleitern gebildete Strukturmusters ein Thermoelement fixiert sein, dessen Signalleitungen mit separaten Kontakten am Außenrand des Tabletts verbind bar sind.

Nachteilig ist jedoch die nur lokal gemessene Temperatur als Regelgröße für den Heizleiter. Wie bereits erwähnt, ermöglicht die besondere Struktur der Heizeinlage ihre Verwendung in unterschiedlichen Serviertablett-Konstruktionen, wobei notwendige Modifikationen z.B. in der Materialwahl für das Tablett in einfacher Weise möglich sind. Insbesondere bei unmittelbarem Kontakt der Heizeinlage mit der Unterseite einer Tablettschale ist auf die Temperaturbeständigkeit des Materials der Tablettschale zu achten, um Verwerfungen der Aufstellfläche des Serviertabletts zu vermeiden.

Eine zusätzliche Wärmeisolierung des Serviertabletts zur Unterseite des Tabletts hin kann durch Einbringen eines Wärme isolierenden Additivs, z.B. feine Glasperlen, in die unteren Tablettschichten erreicht werden und behindert die Funktion der Heizeinlage nicht.

In der Zeichnung ist ein Ausführungsbeispiel der Serviertablett- Heizeinlage schematisch dargestellt und wird an Hand der Figuren näher beschrieben. Dabei zeigen
- **Fig. 1**: eine verzwirnte Litze,
- **Fig. 2**: eine aus mehreren Litzen verzwirnte Gesamt-Litze,
- **Fig. 3**: eine Heizeinlage in kreisförmiger Mäanderstruktur und
- **Fig. 4**: eine Heizeinlage mit elektrischen Sicherheits-Elementen.

Fig. 1 zeigt eine aus mehreren Filamenten 1 verzwirnte Litze 2 eines Heizleiters. Eines der Filamente I' ist aus der Verzwirnung herausgeführt. Die einzelnen Filamente 1, I' sind ohne gegenseitige Isolierung miteinander verzwirnt und können aus gleichen oder unterschiedlichen Materialien bestehen.

In die Litze 2 ist ein Filament 3 als Seele eingefügt, um die herum die anderen Filamente 1, I' verzwirnt sind. Das Filament 3 ist mit einer elektrisch isolierenden, thermisch leitenden Beschichtung 4 versehen. Das Filament 3 dient als Temperatur-Sensor. Es kann anstatt als Seele auch mit vorzugsweise zur Verzwirnungsrichtung gegenläufiger Wickelrichtung auch auf den Umfang der Litze 2 gelegt werden.

Die Filamente 1, I' können von dem Filament 3 getrennt zu einem gemeinsamen Ende zusammengefasst werden. Die Gruppe der Filamente 1, I' und das Filament 3 sind mit unterschiedlichen Kontakten am Außenrand eines nicht dargestellten Serviertabletts verbindbar.

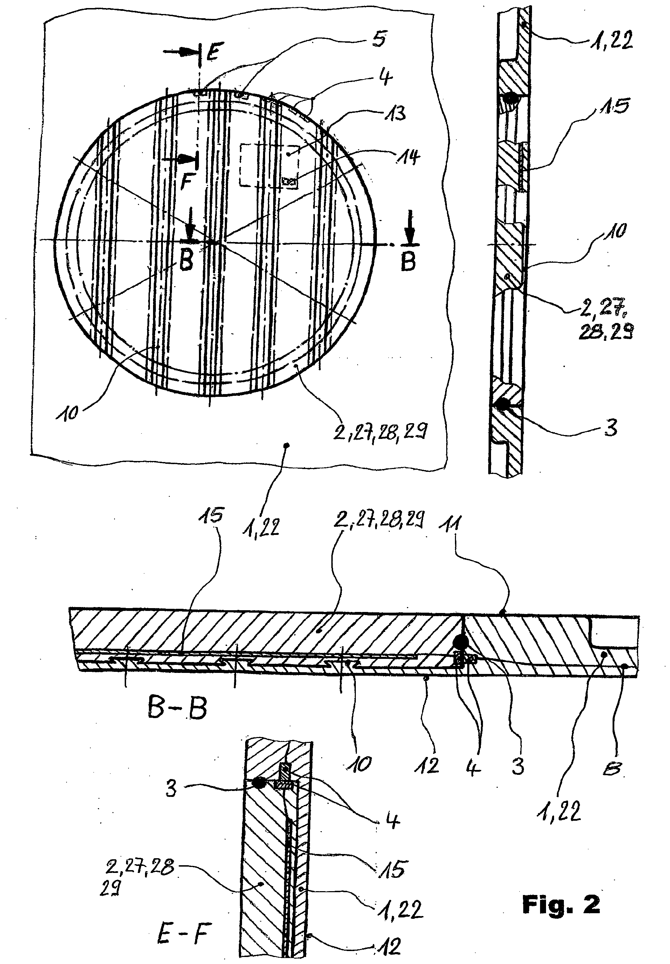

Die Litze 2 ist mit einer äußeren Umhüllung 5 versehen, die nur über einen Teil des Umfangs dargestellt ist. In die Zwischenräume der miteinander verzwirnten Filamente 1, I' kann ein nicht weiter dargestelltes elektrisch leitendes Pulver als Füllstoff eingefügt sein, das durch die Umhüllung
5 am Herausfallen aus der Litze 2 gehindert wird. Das Pulver unterstützt die Stromleitung im Gesamtquerschnitt der gegenseitig nicht isolierten Filamente 1, 1'. Die Umhüllung 5 dient außerdem der mechanischen Festigkeit der Litze 2 gegen Verformung des Querschnitts beim Einwirken eines äußeren Drucks auf die Litze 2.2. Fig. 2 zeigt eine aus mehreren Litzen 2, 2' verzwirnte Gesamt-Litze 6. In die Litzen 2, 2' sind jeweils isolierte Filamente 3 eingelegt. Die Gesamt Litze 6 ist ebenfalls mit einer Umhüllung 5 versehen, die demselben Zweck dient, wie zur Fig. 1 beschrieben.

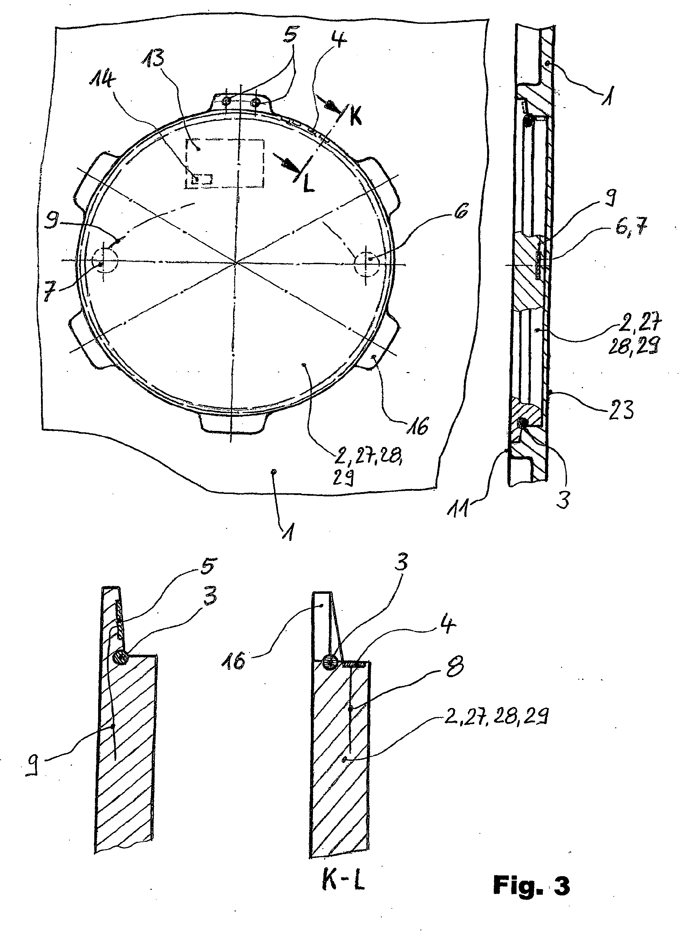

Fig. 3 zeigt eine Heizeinlage 7 mit Heizleiter-Litzen 2, 6, die auf einem nicht erkennbaren Vlies aufgenäht oder anderweitig in einer mäanderförmigen Struktur fixiert sind. Dargestellt ist eine kreisförmige Flächenbelegung, bei der aufgrund der mäanderförmigen Anordnung der Litzen 2, 6 das Ende einer Litze 2, 6 kreuzungsfrei radial aus dem Inneren der Heizeinlage 7 herausgeführt ist. Die Litzen 2, 6 sind im Wesentlichen parallel zueinander fixiert und aufgrund ihrer Flexibilität mit einem relativ geringen Radius jeweils rückführend umgebogen, so dass sich ein nicht belegter radialer Flächenbereich ergibt, der für die Rückführung der Litze 2, 6 oder anderer Leitungen nutzbar ist.

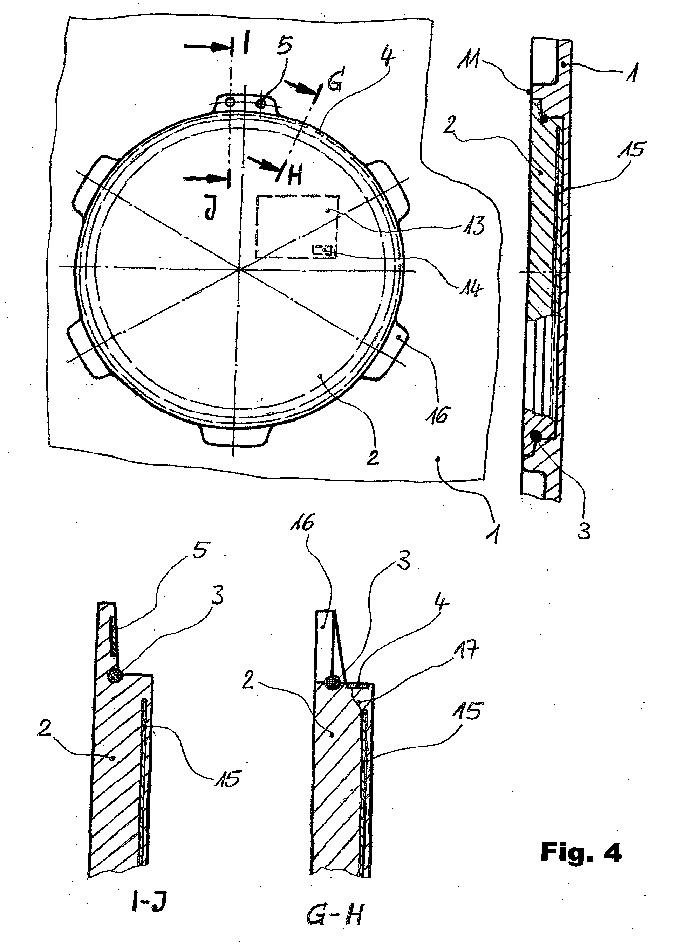

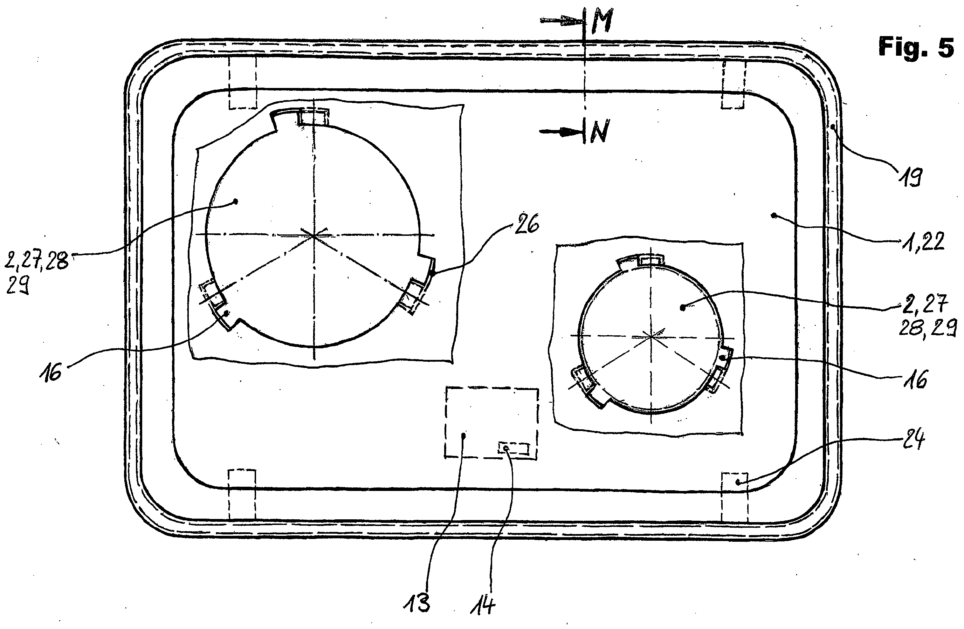

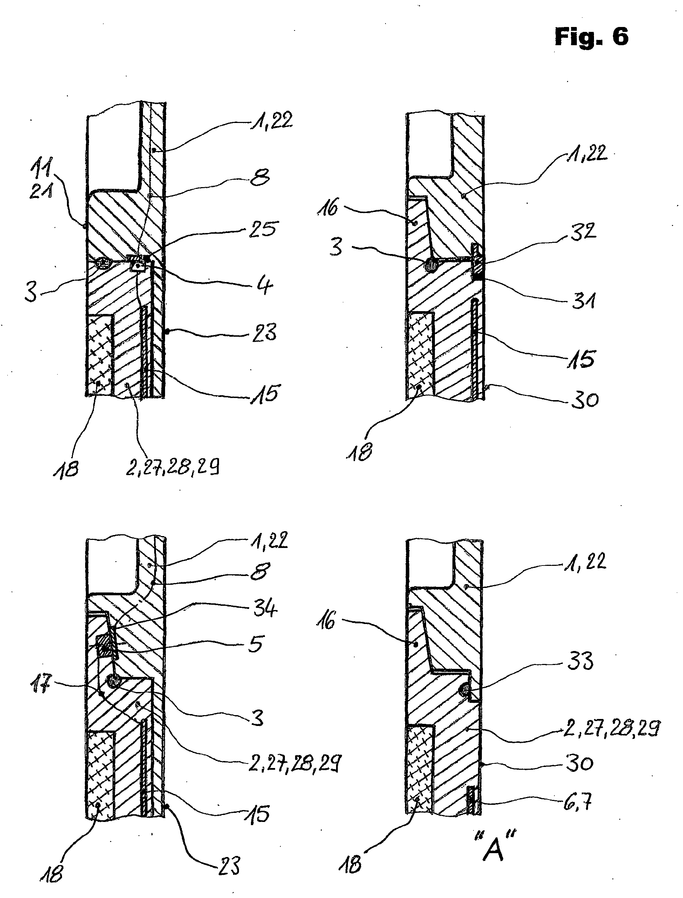

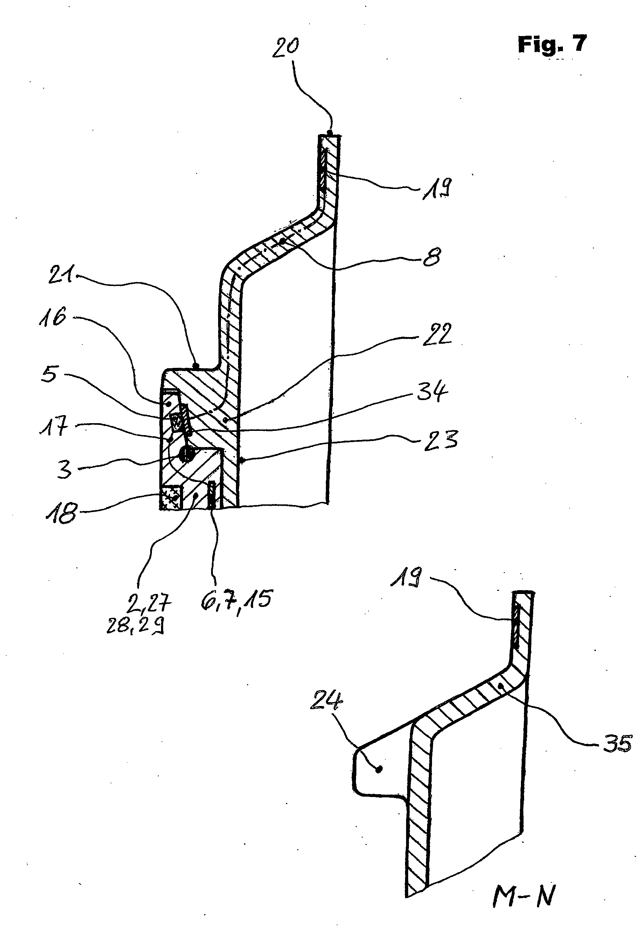

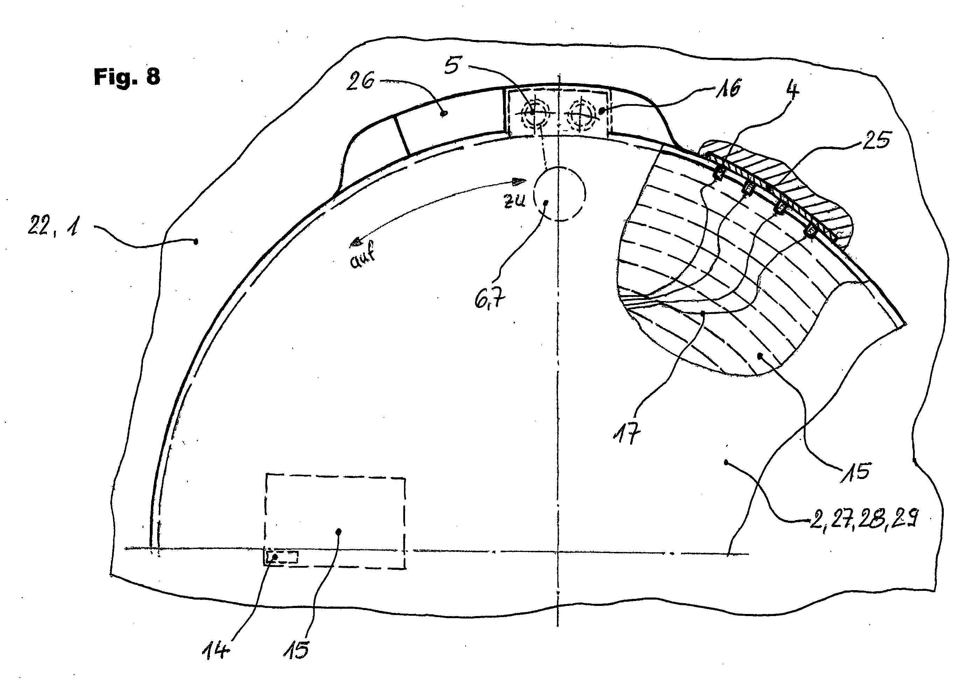

Fig. 4 zeigt eine Heizeinlage 7 mit eingefügten Sicherheitselementen. In die Zuleitung der Heizleiter-Litze 2, 6 ist als Überlastsicherung ein Bimetall-Schalter 8 eingefügt, der im
Normalbetrieb geschlossen ist und bei Überhitzung aufspringt. In den Flächenbereich der Heizeinlage 7 ist zusätzlich ein Thermoelement 9 mit zusätzlichen Signalleitungen 10 eingefügt, die isoliert neben der aus dem Inneren der Heizeinlage herausführenden Heizleiter-Litze 2, 6 verlegt sind.

### Ende der In-Bezugnahme von Az. 10 2014 108 553.1

Serviertabletts sind in unterschiedlicher Ausgestaltung bekannt, insbesondere sind Serviertabletts aus geschichteten,- verpressten Kunststofffolien bekannt. Sie bestehen üblicherweise aus mehreren übereinander liegend miteinander fließverpressten SMC-Folien (SMC = Sheet Molding Compound) in einer Schichtdicke von jeweils 1,8 bis 3,5 mm. Das Material kann mit einem geringen Reaktionsschwund verarbeitet werden und ist auch bei größeren lokalen Temperaturunterschieden formstabil.

Aus der Druckschrift DE 10119 104 A1 ist es bekannt, am Tablett als Heizmittel eine elektrische Heizplatte anzuordnen. Eine solche Heizplatte muss in eine entsprechende Aussparung in der Tablettfläche eingesetzt werden. Aufgrund thermischer Spannungen können Ritzen an den Übergangsrändern entstehen. Die eingelegte Heizplatte hat zudem noch den Nachteil, dass sich diese wölbt und nicht als ebene Aufstellfläche fungiert und somit keinen optimalen Wärmeübergang erzeugt.

Es ist auch bekannt, in solche Servicetabletts eine Heizeinlage zu integrieren, um auf dem Tablett stehende Speisenbehälter zu erwärmen. Aus der Gebrauchsmuster-Anmeldung DE 20 2013 011 699 U1 ist ein Serviertablett mit einer durchgehend ebenen Aufstellfläche bekannt, in die mindestens eine lokal begrenzte, über einen Heizleiter als Heizelement elektrisch erwärmbare Heizzone integriert ist, wobei die Heizleiter mit elektrischen Kontakten am Außenrand des Tabletts verbunden ist. Die Heizzonen können in unterschiedlichen Flächenformen dargestellt sein. In die Heizzonen können auch Temperatur-Sensoren zur Steuerung der zugeführten Heizenergie integriert sein.

Aus der Druckschrift Az. 10 2014 108 553.1 ist eine Serviertablett-Heizeinlage bekannt, die in unterschiedliche Konstruktionen von Serviertabletts integrierbar ist, ohne lokale Spannungsrisse und Verwerfungen in der Tablettfläche zu erzeugen. Die Heizeinlage sollte in einfacher Weise an unterschiedliche Heizzonen-Formen und Heizleistungen anpassbar und über eine Temperaturmessung in der Temperatur regelbar sein.

Durch das Fixieren der Heizleiter auf einem Vlies, insbesondere durch Aufnähen, wird eine flächige Heizeinlage geschaffen, die an die Unterseite einer Serviertablett-Schale angeklebt oder als Zwischenlage beim Verpressen von SMC-Kunststofffolien in diese eingelegt werden kann.

Die Heizleiter bestehen dabei mit Vorteil aus mehreren zu einer Litze verzwirnten Filamenten. Als Filamente werden dünne Drähte oder leitende Fasern bezeichnet, die der Litze eine hohe Flexibilität geben, sodass diese in Form unterschiedlicher Heizleiter-Strukturen auf dem Vlies fixiert werden können. Die Enden der Heizleiter können dabei an vorbereitete Kontakte am Außenrand des Tabletts herangeführt und mit diesen verbunden werden. Das Vlies mit den Heizleitern kann als Zwischenlage bei einem aus SMC-Folien verpressten Serviertablett in einer Dicke hergestellt werden, die von den abdeckenden Materialschichten des Tabletts beim Verpressen vollständig in das SMC-Material eingeschlossen werden kann.

Aus der Druckschrift DE 42 31 341 A1 ist ein Serviertablett bekannt, das aus einer oberen und einer unteren schlagzähen Kunststoffschale besteht, deren Zwischenraum mit einem Kunststoffschaum ausgefüllt ist. In die obere Kunststoffschale sind Aufnahmen für Speisengeschirre eingearbeitet, wobei die Aufnahmen mit elektrischen Kontaktflächen zur Übertragung von elektrischer Heizenergie in speziell ausgebildete Speisengeschirre versehen sind.

Aus der Druckschrift US 6 521 873 B1 ist eine Heizeinlage für eine Wärmedecke mit elektrischen Kontakten am Außenrand bekannt. Die Heizeinlage besteht aus einem Graphit-Faserbündel, das mit einer thermisch leitenden Kunststoffumhüllung versehen und auf einer flexiblen, faserbasierten Schicht mittels eines Fadens in Form einer Heizleiterstruktur befestigt ist.

Aus der US 2011/0 278 280 A1 ist ein Wärmehaltesystem für Speisen bekannt. In eine Bodenplatte des Wärmehaltesystems ist ein elektrischer Heizleiter integriert, dessen Enden mit elektrischen
Kontakten am Rand des Wärmehaltesystems verbunden sind. Der Heizleiter besteht aus einelektrisch leitenden, verzwirnten Faserbündel, das auf einem Vlies-Material befestigt und in die Bodenplatte eingepresst ist.

Aus den Druckschriften US 5 093 556 A und DE 27 58 805 A1 sind Vorrichtungen zum Erwärmen von Speisen bekannt, die in Behältern auf einem Serviertablett angeordnet sind. Die Serviertabletts weisen in ihrem Innern eine Schaumstoffisolierung zur Verhinderung von Wärmeverlusten auf.

Aus der Druckschrift DE 10 2004 011 514 A1 ist ein elektrisches Heizelement bekannt, das einen Faden mit einer Vielzahl von elektrischen Leitern aufweist. Die elektrischen Leiter bestehen aus einem fadenförmigen Kern aus Kunststoff, der von einer metallenen Umhüllung umgeben ist. Mehrere solcher Leiter können zu einem Zwirn verdreht werden.

Aus der Druckschrift DE 10 2006 017 732 A1 ist ein leitfähiges textiles Flächengebilde zur Verwendung in Kraftfahrzeugen bekannt. Die elektrisch oder optisch leitfähigen Filamente des Flächengebildes können als Heizleiter, als Temperatursensor, als Druckerfassungssensor oder als Antenne geeignet sein.

Aus der Druckschrift WO 2007/099 019 A1 ist ein Heizleiter für Textilien bekannt, der aus einer Anzahl elektrisch gegeneinander isolierter Filamente besteht. Die einzelnen Filamente sind mit einem Glasüberzug zur elektrischen Isolierung versehen.

In das Filamentbündel können auch nicht isolierte Filamente eingefügt sein. Die Filamente des Bündels können in sich verdreht oder parallel zueinander ausgerichtet und von einer äußeren Umhüllung zusammengefasst sein.

### weiterer Stand der Technik

Als Stand der Technik ist anzumerken, dass schon Bauelemente bekannt sind, die als PTC-Heizelemente in allgemeinen industriellen Bereichen Verwendung finden und dass Kunststoffmaterialien gebildet worden sind, die ein PTC ähnliches Verhalten aufweisen und als plattenförmige Konfigurationen ausgebildet sind.

Bei der Schrift DE 10 2009 045 741 A1 zeigt sich eine Hochleistungs-PTC-Heizvorrichtung bei der Wärmeabstrahlfinnen durch Vergrößerung der Fläche an den seitlichen Flächen von PTC-Stäben, die Wärmeübertragungseffizienz verbessert werden soll. Wobei anzumerken ist, dass jedoch der verwendete Silikonkleber zwischen Wärmeabstrahlfinnen und PTC-Stäben hinderlich für die Wärmeübertragung sein kann.

Aus der Schrift DE 10 2013 209 957 A1 geht hervor, dass vielfach PTC-Heizelemente in Haushaltsgeräten z.B. Herdplatten, sowie in der allgemeinen Industrie in speziellen Fällen auch in der Automobiltechnik sowohl auch in der Medizintechnik, für das erwärmen, erhitzen oder temperieren von Flüssigkeiten oder festen Körpern eingesetzt wird.

**Ebenfalls ist Stand der Technik,** dass beheizte Bauteile bekannt sind, wobei hier eine Verbindung von Schichten, die durch klebende Bindemittel, als Verbund hergestellt werden, Verwendung finden. Die so gefertigten Heizgeräte erzeugen im besonderen Abstrahlwärme (Infrarotstrahlung), die wesentlich im Wohnbereich oder in der Automobilindustrie zur Anwendung gelangen.

Aus bekannten Schriften sind schon Heizelemente aus elektrisch leitfähigen Kunststoffen publiziert. So z.B. bei der WO 2002052899 A1, in der eine Flächenheizung mit einem Träger und einer Heizschicht, die elektrisch leitfähigen Kunststoff enthält, dadurch gekennzeichnet, dass die Heizschicht durch einen flexiblen Film gebildet ist, und dass der Träger ebenfalls flexibel ist.

So ist aus der Schrift DE 10 2009 028 113 A1 zu entnehmen, dass es sich hierbei um eine Heizung in einer Vorrichtung zur Behandlung von Abgasen bzw. Reduzierung von NOx im Abgas einer Verbrennungskraftmaschine eingesetzt wird.

In der Schrift EP 1148 091 A1 wird beschrieben, dass beheizte Bauteile für die verschiedensten Anwendungsfälle konzipiert wurden. Hierbei wird z. B. ein wärmeabstrahlendes System für Innenverkleidungen von KFZ-Kabinen beschrieben. Derartige Heizelemente/Gerätschaften wurden und werden noch vielfach eingesetzt. Bei diese Art der Heizelemente/Gerätschaften, in dem elektrische Heizwiderstandsdrähte, die zwischen Schichten faserverstärkten Kunststoffschichten, verlegt sind, es nicht verhindert werden kann, dass es trotz vollflächiger Verlegung von mäanderförmig verlegten Heizdrähten oder sonstigen Heizbahnen, eine Inhomogenität der Wärmeverteilung und somit auch eine ungleichmäßige Wärmeverteilung, durch ungleichmäßigen Wärmefluss an die eigentliche Wärmeoberfläche kommt. Auch Wärmestaus uns somit eine Möglichkeit von Überhitzungen sind eine Gefahr und können nicht ganz ausgeschlossen werden.

In der Schrift WO 2007/118498 A1 wird ebenfalls ein beheiztes Bauteil, insbesondere eine zweidimensional geformte platte oder ein dreidimensional gestaltetes Formteil, dokumentiert. Das aber im wesentlichen für den Zweck konzipiert wurde Räume in verschiedenen Fahrzeugen oder Wohnräume zu beheizen. Hier werden auch nicht die Temperaturen erreicht wie bei einer Heizplatte zum Aufheizen/Erwärmen von Speisen. Hier wird aber, im Gegensatz zu der vorliegenden Erfindung, zur Erwärmung des Matrixkörpers immer eine Lage aus Kupferdrähten/Leiterbahnen bzw. ein integrierter Wärmeträger benötigt. Außerdem ist zur Stabilisierung des Bauteiles eine obere und untere Armierung, die durch Wärmebehandlung erzielt wird, erforderlich.

**Am wichtigsten** ist es jedoch nach wie vor, wenn elektrische Heizungen, dafür Verwendet werden sollen, um Gerätschaften, insbesondere Service-Tabletts aufzuheizen, mit denen vorbereitete Speisen erhitzt, erwärmt oder warm gehalten werden sollen, dass dies in jeglicher Hinsicht effektiv und effizient gewährleistet ist.

In den meisten Fällen, wenn elektrische Heizungen benötigt werden, findet heute immer noch die klassische Widerstandsheizung, für die vielfältigen Einsatzfälle, Verwendung. Hierbei wird meist ein Widerstandsdraht eingesetzt, der in oder auf einen Träger aufgebracht wird. Dabei sind die Möglichkeiten der Aufbringung sehr vielseitig so z.B. durch einweben, aufsticken, aufdrucken oder ähnl. Fertigungsverfahren.

Bei vielen Einsatzfällen wird eine gute homogene Wärmeverteilung wegen der Effizienz eingefordert, die durch einen Widerstandsdraht, der meist mäanderförmig aufgebracht ist, nicht gegeben ist, zumal auch die Aufbauhöhe der Widerstandsdraht-Konstruktion, manchmal hinderlich sein kann.

Um den Ansprüchen vorliegenden Erfindung zu genügen und die gewünschten Ergebnisse zu erzielen, wurden natürlich auch Materialen verwendet, die die Grundvoraussetzungen für die Anwendungen bietet. Hierbei sollten auch einige grundlegende, in experimenteller Art und Weise, Faktoren für die Fertigung und Funktion der Heizplatten geschaffen. Hierbei wurden natürlich, schon bestehende und somit als Stand der Technik bekannte, Faktoren verwendet die durch Hersteller von bestimmten Kunststoffen und Verbundmaterialien die aber noch für die vorliegenden Erfindung weiter entwickelt werden mussten.

Im Gegensatz zu schon bekannten Systemen, ist es jedoch bei der vorliegenden Erfindung nicht nötig, dass ein integrierter Wärmeträger/Heizleiter für eine Heizplatte, die aus einem Spezialcompound besteht und als externe einlegbare Heizplatte ihre Funktion ausüben kann. Die dabei erzielten Temperaturen bewegen sich nach vorliegenden Messungen jenseits der 105° C.

In der Darstellung von Fig. 1 und Fig. 3 ist ein Beispiel der erfindungsgemäßen, einlegbaren bzw. eingespritzter oder eingezogener Heizplatte beschrieben. Hierbei wird das Spezialcompound in das zwei Platten, die als Elektroden wirken eingearbeitet. Das Spezialcompound besteht aus gefüllten Fasern, die unterschiedliche Widerstände besitzen, weil die gefüllten Fasern mit niedrigem Widerstand und Fasern mit hohen Widerständen, werden auf der einen Seite die Ladungsträger an die Elektroden geleitet und auf der anderen Seite sorgen die gefüllten Fasern mit hohem Widerstand, für das gewünschte Aufheizen, der Heizplatte erreicht. Durch die einlegbare Isolationsplatte ist eine thermische Möglichkeit gegeben, dass die Wärmeenergie, so wie gewünscht hauptsächlich nur in eine Richtung (nach oben) geleitet wird.
Die mechanische Festigkeit der Heizplatte ist durch die Zusammensetzung der verschiedenen Komponenten im Spezialcompound wie z.B. Kunstharz, Glasfaserfilamente in den unterschiedlichsten Abmessungen, gefüllte Fasern,
Die einlegbare Heizplatte wird im Spritzgussverfahren hergestellt und unter hohem Druck Verdichtet und dabei natürlich erhitzt wird, sodass in diesem Materialverbund keine Lunkerstellen (Lufteinschlüsse) entstehen können, die eine spätere Fehlfunktion (Hotspot) verursachen können. Sodass also keine weiteren Armierungsmaßnahmen, was die Stabilität der Heizplatte betrifft, notwendig sind.

**Nach dem Stand der Technik ist auch bekannt,** das im Arbeitsgebiet "Elektrisch leitfähige Kunststoffe" Rezeptur- und Verfahrensentwicklungen von elektrisch leitfähigen, insbesondere thermoplastisch verformbaren Polymeren umfasst. Durch die Modifizierung mit elektrisch leitfähigen Additiven (z.B. Carbon Nano Tubes (CNT), Graphit, Kohlefasern, Leitruß, Metallfasern) oder

Additivmischungen können im Extrusionsverfahren sowohl im Spritzgussverfahren mit antistatischen (ESD) als auch mit elektrisch hochleitfähigen Eigenschaften für verschiedene Bereiche der Industrie hergestellt werden.

Für Anwendungen, die diese sehr homogene Flächenverteilung der Wärme und eine größere Effektivität, auch was die Leistungsaufnahme betrifft, zu gewährleisten bzw. zu erzielen, ist das (Carbon-Nano Tubes - CNT) Heizverfahren fast unumgänglich, zumal es möglich ist durch unkompliziertes Auftragen der Heizschicht, in den verschiedensten Varianten, eine sehr dünne Heizschicht auf die verschiedensten Trägermaterialien aufzubringen.

Aufgrund einer sehr guten Wärmeverteilung auf einer Fläche, ist es durchaus möglich, die normale Betriebstemperatur etwas nach unten zu korrigieren, was auch noch für die Betriebskosten relevant ist. Je nachdem was für ein Trägermaterial Verwendung findet, geht eine dünne und vor allen Dingen gleichmäßige Beschichtung, für eine doch größere Gewichtsreduzierung einher.

Auch als leitfähiges Füllmaterial ist die faserartige Struktur der Kohlenstoff-Nanoröhren (Carbon-Nano Tubes - CNT) in einem bestimmten Verhältnis für sehr viele Composite ganz hervorragend geeignet. Die einlegbare Heizplatte besteht aus einem Grafit-Carbon- Kunststoff Verbundmaterial ausgestaltet als Composite, wobei die Wärmeerzeugung ähnlich der grundlegenden Wirkungsweise der Erwärmung fester Körper (aus Metall) beim Stromfluss verläuft.

Das Spezialcompound aus Grafit-Carbon- Kunststoff Verbundmaterial ist enorm elektrisch leitfähig, die Elektronen werden durch das elektrische Feld in Richtung von Feldlinien hoch beschleunigt. Auf dem Weg durch das Material kommt es zu elastischen Stößen der Elektronen mit anderen Elektronen und Photonen. Die bei diesen Stößen übertragene Energie führt zu einer sehr großen Eigenschwingung und die Wärmeentwicklung nimmt kontinuierlich zu.

Das Compound ist ein geschlossenes,- faserverstärktes Medium mit inkorporierten Kupferkontakten, woran Anschlussdrähte angeschlossen sind, die dann innerhalb, des in Spritzguss-Technik hergestellter einlegbarer Heizplatte, verläuft und an den sich am Umfang der Heizplatte befindlichen Kontakten, die ebenfalls eingespritzt sind, zum Regeln bzw. Steuern dieser enden.

Durch die sehr homogene dichte netzartige Struktur der leitfähigen Fasern wird eine sehr gleichförmige d.h. gleichmäßige Erwärmung, sowie auch eine Unempfindlichkeit der Heizplatte gegen mechanische Beschädigungen erreicht.

In der Schrift EP 22 964 31 A1 wird eine Flächenheizung für einen Garraumvorrichtung angegeben, wobei eine CNT-Beschichtung Verwendung findet, jedoch im großen Gegensatz zu der vorliegenden Erfindung steht. Hier werden sehr viele Einzelkomponenten zu einer Heizvorrichtung z.B. Platte. thermische Isolationsschicht, elektrische Isolierschicht, Schaumglas, CNT-Schicht, Metallfolie usw.

In der Schrift DE 10 2013 209 957 A1 wird eine Heizvorrichtung beschrieben, bei der noch ein industriell gefertigtes PTC-Element, zusätzlich in Gesamtkonzeption integriert ist. Genau dieses Heizelement wird von der Zulieferindustrie z.B. als Schaltschrankbeheizung im Zusammenhang mit mit einem Lüfter eingesetzt.

Unter den Kunststoffverarbeitungsverfahren nimmt die Spritzgießtechnik eine zentrale Rolle ein. Hochgefüllte und elektrisch leitfähige Kunststoffe ermöglichen technische Anwendungen wie den Einsatz von Bipolarplatten in Brennstoffzellen. Für die kostengünstige Herstellung solcher Komponenten ist die Auswahl eines passenden Fertigungsverfahrens von großer Bedeutung. Das Spritzgießverfahren zeichnet sich als sehr effizientes Fertigungsverfahren der Kunststofftechnik aus, weshalb hochgefüllte Thermoplast-Compounds auf Basis eines Polypropylens im Spritzgießprozess zu elektrisch leitfähigen Formteilen verarbeitet werden.
Die Werkstoffauswahl hat anwendungsadaptiert an die Anforderungen unter Berücksichtigung der Verarbeitbarkeit, der Kosten und Umweltverträglichkeit einen sehr hohen Stellenwert.

Die Grundeigenschaften der technischen Kunststoffe sollten als Voraussetzung für eine erfolgreiche Werkstoffauswahl und schließlich erfolgreiche Realisierung von kunststofftechnischen Produkten zu sein. Die Kunststoffe unterscheiden sich grundlegend von anderen Konstruktionswerkstoffen. Die Berücksichtigung dieser Unterscheide ist daher eine grundlegende Basis für eine erfolgreiche Bauteilkonstruktion.

Die Kunststoffe zeichnen sich durch ihre besonderen Leistungseigenschaften aus. Sie erlauben die wirtschaftliche Herstellung von komplexen, multifunktionalen Teilen mit geringem Gewicht und vergleichsweise hoher Festigkeit im Endbearbeitungszustand. Die aus Kunststoffen hergestellten Produkte benötigen dabei wenig Energie für ihre Fertigung und sind dadurch, aber auch begründet in der vielfältigen Recyclingfähigkeit der Werkstoffe, ökologisch im Gebrauch. Diese günstigen technischen, wirtschaftlichen und ökologischen Fakten tragen zu der heute hohen Verbreitung der Kunststoffe als Konstruktionswerkstoffe in den vielfältigsten Anwendungsbereichen bei und bilden die Basis für neue Anforderungsprofile und somit deren stetig wachsenden Marktanteile, z.B. in der CNT-Technik (Carbon Nano Tubes).

Kunststoffe aus leitenden Polymermolekülen sowie Kunststoffe mit neuartigen Additiven, insbesondere Kohlenstoff-Nanoröhrchen (Carbon Nano Tubes) Herstellung, Eigenschaften, finden heute immer mehr Anwendungsmöglichkeiten.

Anwendungsgebiete sind vor allem antistatische Folien und Bauteile für die Medizintechnik, Gehäuse für Mobilfunktechnik, Verpackung,-Lebensmittelindustrie, elektronische Geräte sowie den Haushaltsbereich usw.

CNTs (Carbon Nano Tubes) sind leitfähige Fasern aus Kohlenstoff mit einem Durchmesser im Nanometerbereich. Aufgrund ihrer sehr hohen Leitfähigkeit, die der tausendfachen von Kupfer entspricht, eignen sie sich besonders als leitfähige Additive in verschiedenen Kunststoffen und sind dabei sehr Formstabil und haben eine große Festigkeit aufzuweisen.

Auch ist die Machbarkeit von Nano beschichteten einlegbaren und wechselbaren Platten bzw. ein Servicetablett, auf dem bestimmte Zonen mit einer Nanobeschichtung als Heizquelle aufgebracht sind, die zudem auch noch farbig als Sichtbarmachung der Heizzonen unterlegt wären, gegeben.

Für die vorliegende Erfindung, ist es abgesehen davon, dass außer den sehr guten elektrischen Eigenschaften, die mit CNT-Technik zu erzielen sind, einen weiteren entscheidenden Vorteil gibt dadurch bestimmt, dass das CNT-Material eingearbeitet in die verschiedensten Thermoplaste, in anderen konstruktiven Anwendungen/Bauteilen in jeglicher Form, , insbesondere in einlegbare Heizplatten und für die verschiedensten Fertigungstechniken z.B. Spritzgusstechnik einsetzbar ist.

Bei der vorliegenden Erfindung ist die Carbon Nano Tubes (CNT-Technik) der ideale Füllstoff bzw. Beschichtungssystem. Für diese spezielle Anwendung ist außer den thermischen Vorteilen auch noch die mechanische Eigenschaft von Wichtigkeit. Dank eines relativen geringen elektrischen Widerstandes, sofern es so gewollt ist, kann auch Niedervolt bis 48 Volt zum Einsatz kommen, zumal eine sehr gleichmäßige Wärmeverteilung auf einer Fläche erzielt wird.

Bei der CNT-Technik ist es auch von sehr großem Vorteil, dass auch Konstruktionsbauteile dreidimensional ausgestaltet und eine integrierte Heizfläche eingearbeitet werden kann.

Es ist bekannt, dass mit Hochdruck an thermischen Speichern (Latent-Wärmespeicher) durch Spezialcompounds-Polymere gearbeitet wird. Dieser Werkstoff wäre eine weitere Option für ein einlegbares Heizelement durch einen konstruktiven Aufbau als Latent Wärmespeicher. Hierbei würde auch die Abwärme der auf die Tablettoberfläche aufgestellten Gefäße, wie Teller, Schalen Schüsseln oder ähnliches, schon während des bestücken der Serviertabletts mit anschließendem beladen der Speisenverteilwagen, gespeichert und zu einem späteren Zeitpunkt, d.h. beim Transport schon nutzbar ist bzw. dass die Speisen so länger warm gehalten werden.

Latent-Wärmespeicher haben gegenüber herkömmlichen Speicherarten den Vorteil, dass auch die latente Energie gespeichert werden kann und eine wesentliche Erhöhung der Energiedichte besitzt. Hier spricht man auch von wärmeleitfähigen Polymeren, die sich sehr gut Bearbeiten und Verformen lassen. Ökonomische Latentwärmespeicher mit polymeren Phasenwechselmaterialien (PCM) arbeiten im Temperaturbereich von von ca. 75°C bis ca. 380°C.

Latentwärmespeicher sind mit PCM (engl. phase change material), sogenanntes Phasenwechselmaterial) gefüllt. Sie nutzen den physikalischen Effekt des Phasenwechsels eines Speichermediums wie z.B. Salzhydrat oder Paraffin: Ändert dieses seinen Aggregatzustand, zum Beispiel von fest nach flüssig, muss es Wärme aufnehmen.

Dabei bleibt die latente Wärme (die im Phasenübergang zugeführte Energie) im Stoff gebunden. Durch physikalische Einwirkung kann diese im Speichermaterial gebundene Energie auch nach einem längeren Zeitraum wieder freigesetzt werden. Aus diesem Grund besitzen Latentwärmespeicher eine viel höhere Speicherkapazität als herkömmliche Wasserspeicher und können Wärme fast verlustfrei speichern. Probleme bereiten derzeit noch das Be- und Entladen der Speicher und der definierte Temperaturbereich, in dem dies geschehen muss. Einige Hersteller bieten bereits marktreife Spezialcompounds zur Herstellung von Latentwärmespeicher an.

Phasenwechselmaterialien werden unter anderem auch zur Speicherung von Wärme und Kälte in Gebäuden, Solartechnik, sowie auch für sonstige industrielle Anwendungen verwendet.

Eine Optimierung der wärmeleitfähigen Kunststoffe für noch mehr Speicherkapazitäten setzt, eine Steigerung der Wärmeleitfähigkeit, Erhöhung der Speicherdichte, Minimierung der Volumenveränderung beim Phasenübergang sowie Langzeitstabilität und Reproduzierbarkeit voraus. Durch die Zugabe von geeigneten Additiven kann die Effizienz der PCMs optimiert werden.

Die Optimierung würde den Vorteil bieten, neben der sensiblen Energie auch latente Energie speichern zu können und somit eine höhere Energiedichte aufweisen. Die latente Energie (verborgene Energie) speichert die bei dem physikalischen Phasenumwandlungsprozess im Werkstoff enthaltende Enthalpie, ohne, dass sich die Temperatur des umgewandelten Stoffes stark verändert. Die Enthalpie beinhaltet also zusätzlich zur Inneren Energie die Energie des Drucks. Mit dem Wärmebegriff ist aber nicht die gesamte in der Materie gespeicherte Energie erfasst, das geschieht mit dem Begriff Enthalpie.

Die Enthalpie H ist eine thermodynamische Zustandsgröße. Sie ist eine Bezeichnung für die abgegebene bzw. aufgenommene Wärmemenge einer Reaktion.
Also zusammengefasst ist es eine Maßeinheit. Gemessen wird damit die Energie eines thermodynamischen Systems. Sie wird in der Regel durch den Buchstaben H (Einheit: Joule, J) Der erste Hauptsatz **der** Thermodynamik ist die Verallgemeinerung des Energie- ... Reaktionswärmen bei konstantem Druck: Die Enthalpie H. pV. UH +. = p. ()V.

Bei Fließsystemen ohne äußere Energiezufuhr bleibt die Enthalpie des strömenden Mediums erhalten. Das macht die Enthalpie zu einer handlichen Größe in der Thermodynamik. Auch bei Systemen, die ein veränderliches Volumen, aber konstanten Druck haben, lassen sich energetische Effekte leichter in Form der Enthalpie als mit der Energie beschreiben.

Die **Fa. Geba** übernimmt die Herstellung der in Zusammenarbeit mit der Montanuniversität Leoben und dem Austrian Institute of Technology (AIT) gemeinsam entwickelten Polymere für die Speicher.

Phasenwechselmaterialien werden unter anderem auch zur Speicherung von Wärme und Kälte in Gebäuden, Solartechnik, sowie auch für sonstige industrielle Anwendungen verwendet.

Es ist bekannt, dass Gerätschaften zum Kühlen von Speisen in sogenannten Speisen-Verteilsystemen bzw. Transportwagen oder Speisenverteilwagen, in denen Speisen fertig gegart, erwärmt, oder warm gehalten und gleichzeitig d.h. hälftig des Tabletts, durch Trennwände, die im Speisenverteilwagen positioniert sind, mit sehr hohem Aufwand mittels eingebautem Kühlaggregat, gekühlt serviert werden können.

Hochgefüllte und elektrisch leitfähige Kunststoffe ermöglichen technische Anwendungen wie den Einsatz von Bipolarplatten in Brennstoffzellen oder in den Bereichen Maschinenbau, Elektrotechnik Verpackungsindustrie, sowie im Aotomobilsektor. Für die kostengünstige Herstellung solcher Komponenten ist die Auswahl eines passenden Fertigungsverfahrens von großer Bedeutung.

Das Spritzgießverfahren zeichnet sich als sehr effizientes Fertigungsverfahren der Kunststofftechnik aus, wobei hochgefüllte Spezialcompounds bzw. Thermoplast-Compounds auf Basis eines Polypropylens im Spritzgießprozess zu elektrisch leitfähigen Formteilen hergestellt werden können.

Der Herstellung von Kunststoffen liegen die drei Reaktionsvorgänge Polymerisation, Polyaddition sowie Polykondensation zugrunde. Als Rohstoff zur Herstellung von Kunststoffen wird vorwiegend Erdöl eingesetzt. Obwohl die Herstellung von Kunststoffen auf Basis nachwachsender Rohstoffe mit einer Wachstumsrate von etwa 4 - 5 % zunimmt, ist heute noch ungewiss ob eine vollständige Substitution der petrochemisch hergestellten Kunststoffe je eintreten wird.

Kunststoffe werden in die drei großen Gruppen der Thermoplaste, Elastomere und Duromere unterteilt. Thermoplaste unterscheiden sich signifikant von den Elastomeren und Duromeren durch die Tatsache, dass sich Thermoplaste beliebig oft durch Temperaturzufuhr in den plastisch verformbaren Zustand überführen lassen. Elastomere und Duromere hingegen können nach Ihrer Verarbeitung durch eine Temperaturzufuhr nicht mehr in den verformbaren Zustand überführt werden.

Technische Kunststoffe sind Polymere, die sich durch ihre mechanischen, elektrischen und thermischen Eigenschaften auszeichnen. Thermoplaste können üblicherweise bis 130°C, entsprechende Duroplaste, wie die Schichtpressstoffe bis 150°C dauerhaft eingesetzt werden. Sie zeichnen sich vor allem durch eine hohe Festigkeit, gute Zähigkeit und Dämpfungseigenschaften sowie in aller Regel durch gute Verarbeitbarkeit und ein ausgewogenes Kosten-Nutzen-Verhältnis aus.

Die Verarbeitung von thermoplastischen Kunststoffen erfolgt maßgeblich durch die Verarbeitungsverfahren Extrusion und Spritzgießen. Bei der Extrusion wird ein meist pulver- oder ein granulatförmiger Kunststoff-Rohstoff durch Zufuhr von Energie aufgeschmolzen und die so kontinuierlich entstehende zähflüssige Kunststoffschmelze durch ein formgebendes Extrusionswerkzeug gepresst. Das so ausgeformte Profil wird entweder direkt gekühlt, so dass ein Halbzeug entsteht (z. B. Ober und Unterschale von Serviertabletts, Blenden für Autoradios usw.) oder die noch verformbare Masse wird durch Folgeprozesse zum Endprodukt (z. B. Flaschen, Hohlkörpern, Geräte zum täglichen Gebrauch) umgeformt.

Beim Spritzgießen von Thermoplasten wird eine flüssige Kunststoffschmelze in ein gekühltes formgebendes Werkzeug eingespritzt und dort durch Temperaturabfuhr in seiner Form fixiert.

Nach dem Kühlvorgang öffnet sich das formgebende Werkzeug und ein fertiges Produkt, kann dem Werkzeug entnommen werden. Das diskontinuierliche Verarbeitungsverfahren Spritzguss kann auf diese Weise in einem einzigen Zyklus von wenigen Sekunden zum Teil mehrere als fertiges Bauteil abgespritzt (produziert) werden.

Die Kunststoffindustrie besteht aus Kunststofferzeugern, Kunststoffverarbeitern und ist ein sehr wichtiger Wirtschaftszweig, so ist dieser Industriezweig heute im Maschinenbau, Elektrotechnik Verpackungsindustrie, oder im Aotomobilsektor durch seine innovativen Lösungen mit speziell abgestimmten Produkteigenschaften nicht mehr weg zu denken.
Ein industrieller Zweig der mehr und mehr auf die Innovation der Kunststoffindustrie baut, ist die allgemeinen Medizintechnik in besonderem auch bei der Versorgung (Speisenverteilung) von Patienten in Krankenhäusern, Alten,-Senioren,- und Pflegeheimen.

Ferner unterscheiden sich die Eigenschaften der Kunststoffgruppen erheblich. Während Elastomere erhebliche Dehnbarkeit bei geringen Festigkeiten aufweisen, stellen die Duromere einen hochfesten, jedoch häufig auch spröden Werkstoff dar. Aufgrund der Tatsache, dass sich diese Werkstoffe bei Temperaturzufuhr chemisch zersetzen (verbrennen), kann nach der Formgebung eine weitere Verarbeitung ausschließlich durch spanende Fertigungsverfahren erfolgen.

Thermoplaste stechen durch sehr gute mechanische Eigenschaften, kombiniert mit einer hervorragenden Verarbeitbarkeit in Massenproduktionsverfahren hervor. Kein anderer Konstruktionswerkstoff bietet derart vielfältige Möglichkeiten zur Formgebung, Kombination und zur Funktionsintegration in ein Bauteil wie thermoplastische Kunststoffe.

Kunststoffe aus leitenden Polymermolekülen sowie Kunststoffe mit neuartigen Additiven, insbesondere Kohlenstoff-Nanoröhrchen (Carbon Nano Tubes) Herstellung, Eigenschaften, finden heute immer mehr Anwendungsmöglichkeiten.

Unter den Kunststoffverarbeitungsverfahren nimmt die Spritzgießtechnik eine zentrale Rolle ein. Kenntnisse über die charakteristischen Eigenschaften von Werkstoff und Verfahrens sowie die elementaren Gestaltungs- und Konstruktionsregeln sind für eine erfolgreiche Bauteilentwicklung unerlässlich.

Kenntnisse über die verschiedenen, technischen Kunststoffe und ihre Eigenschaften müssen im Zusammenhang und im Vergleich angesehen werden, damit der Anwender in die Lage versetzt werden, Kunststoffe anwendungsgerecht auszuwählen bzw. eine getroffene Werkstoffauswahl kritisch beurteilen zu können. Die Grundeigenschaften der technischen Kunststoffe sollten als Voraussetzung für eine erfolgreiche Werkstoffauswahl und schließlich erfolgreiche Realisierung von kunststofftechnischen Produkten zu sein. In anderen Bereichen werden schwere Metallkomponenten durch leichte faserverstärkte Kunststoffe substituiert wie beispielsweise im Flugzeugbau, oder in der Automobilindustrie.

Die wichtigsten Kunststoff-Materialien:
Polystyrole (PS, ABS)
Polycarbonat (PC)
Polypropylen (PP)
Polyacetal (POM)
Polyamide (PA 6, 66, 46, Hochtemperatur)
Polyester (PBT, PET)
Polyaryletherketon (PEEK)
Thermoplastische Elastomere
Thermoplastische Polyester (PET, PBT ...)

Kunststoffe sind Polymerwerkstoffe und übliche Polymere leiten nicht. Selbst leitende Polymermoleküle aber können elektrische Ladung transportieren: die Conductive sind Elektronenleiter mit beinahe metallischer Leitfähigkeit, die Dissipative lonenleiter. Sie können jedoch die bewährten elektrisch leitenden Kunststoffe mit leitfähigen Füllstoffen oder Beschichtungen nicht einfach ersetzen. Ihre andersartige Verarbeitung erfordert neue Überlegungen und führt zu neuen Anwendungen. Für konventionelle leitfähig gefüllte Kunststoffe wird stets an der Optimierung der Füllstoffe gearbeitet. Eine faszinierende Substanz ist dabei der Kohlenstoff im Graphit-Gitter, der sich in ein- oder mehrschichtigen Röhrchen anordnet - das Paradebeispiel ist die viel erwähnte Nanotechnologie (Kohlenstoff-Nanoröhrchen, Carbon Nano Tubes).

Für die Entwicklung hochwertiger Produkte verlangt die Industrie neue Werkstoffe mit elektrischer Leitfähigkeit. Die Kunststoffindustrie stellt Kunststoff-Compounds, also Mischungen mit leitenden Substanzen, in einer großen Variationsbreite des spezifischen Widerstands zur Verfügung. Neuartige Additive wie Kohlenstoff-Nanoteilchen sowie selbstleitende Polymere öffnen ganz neue Anwendungsfelder.

Zur Modifizierung der Leitfähigkeit werden die verschiedensten Kunststoffe mit:
Ruß
Kohlefasern (Carbon)
Stahlfasern (Filamente)
Grafit
nanoskalige Füllstoffe oder Fasern

Auch mit verschiedest anderer Füllstoffe kann Compoundiert werden, sodass diese dann in einen Fertigungsprozess wie, Extrudieren oder Spritzgiessen, einfließen können.

Fließt ein elektrischer Strom müssen die Ladungsträger auch von einer Polymerkette auf eine benachbarte überwechseln, sogenanntes Hopping (springen), weil die konjugierten Ketten nur eine endliche Länge haben. Deshalb ergibt sich der Gesamtwiderstand aus der Summe der Widerstände in den Polymerketten und der Widerstände zwischen den Ketten.

Den größeren Einfluss auf die elektrische Leitfähigkeit hat der höhere Widerstand zwischen den Ketten. Je kürzer die konjugierten Ketten, desto höher der Widerstand, weil die Ladungsträger öfter zwischen den Ketten übertragen werden müssen. Die elektrische Leitfähigkeit elektrisch selbstleitender Polymere liegt im Bereich von 10⁻¹³ bis 10³ S.cm⁻¹.

Intrinsisch leitfähige Polymere, auch leitfähige Polymere genannt, sind Kunststoffe mit elektrischer Leitfähigkeit, die vergleichbar mit Metallen ist. Damit stehen sie im Gegensatz zu normalen Polymeren, die den elektrischen Strom nicht leiten.

Die Leitfähigkeit des Polymers wird durch konjugierte Doppelbindungen erreicht, die eine freie Beweglichkeit von Ladungsträgern im dotierten Zustand ermöglichen.

Entgegen den Erwartungen sind die Polymere im reinen Zustand meist nicht leitfähig. Eine Erklärung hierfür liefert das Peierls-Theorem. Polymere, die elektrisch leitende Füllstoffe wie beispielsweise

Aluminiumflocken oder Ruß enthalten, zählen nicht zur Kategorie der intrinsisch leitenden Polymere. Leitfähige Polymere sind Grundwerkstoffe der organischen Elektronik.

### Für die Entdeckung leitfähiger Polymere um 1977 erhielten Alan J. Heeger, Alan G. MacDiarmid und Hideki Shirakawa 2000 den Chemie-Nobelpreis.

Eine weitere Ausgestaltung ist, dass die einlegbare Widerstands-Heizplatte, incl. innenliegender Heizeinlage, aus mehrlagigem,- gepresstem SMC-Kunststoff-Material gefertigt ist, jedoch auch als komplett Anschlussfertig d.h. mit integrierten Regeltechnik z.B. Temperatursteuerung bzw. Temperaturabschaltung, mittels eingepressten Anschlüssen, einer PTC- ähnlichen Charakteristik, sowie mit einer RFID-Technik und mittels Bajonett oder Klickverschluss in ein aus gepresstem SMC-Kunststoff-Material bestehendes Service-Tablett adaptierbar und auswechselbar ist.

Eine weitere Ausgestaltung ist, dass das einlegbare Widerstands-Heizplatte in ein Werkzeug platziert und dann in einem Fertigungsschritt im Spritzguss oder im Tiefzieh- Verfahren eingearbeitet wird, sodass die Heizplatte vollkommen in den betreffenden Oberschalen, die später zusammen mit Unterschalen, zu einem heizbaren Speisen-Servier-Tablett zusammengefügt und mit Isolationsschaum ausgeschäumt wird, was anschließend durch spezielle Schweiß oder Klebeverfahren an den Schnittstellen wasserdicht verschlossen wird. Das zweischalige Serviertablett kann aus den verschiedensten Materialien wie z.B. Polypropylen, Polyuretan oder ähnlichen, die in den Fertigungstechniken, Tiefziehen, Spritzguss oder ähnl. verarbeitbar sind, gefertigt werden.

Als weitere Ausgestaltung wird die einlegbare Widerstands-Heizplatte, in verschiedenen Formen, in etwas abgewandelter Form d.h. ohne Bajonett oder Klickverschluss, sondern in kreisrunder oder Freiform in ein Oberteil eines zweischaliges Speise- Service-Tablett, was im Nachhinein noch ausgeschäumt oder anderweitig mit Isolationsmaterialien gefüllt wird, zu integrieren.

Ebenfalls die Erfindung betreffend ist die einlegbare Widerstands-Heizplatte sowohl als selbstständiger Träger und gleichermaßen als ein Einbau-Platten-Heizelement, das komplett elektrisch leitfähigen Kunststoff enthält, wobei die Heizschicht durch die komplette Plattendicke durch ein Spezialcompound gegeben ist und einen heizbaren Gegenstand mit einer solchen Widerstands-Heizplatte versehen ist.

Eine Ausgestaltung betrifft die Erfindung für ein Verfahren zur Herstellung einer einlegbaren Widerstands-Heizplatte, wobei diese, aus elektrisch leitfähigem Kunststoff besteht, und mit einer Aufnahme oder Trägerelementen zu beheizten Baugruppen oder Gerätschaften verbunden ist.

Im Gegensatz zu all denen Kunststoffen, die in den angezogenen Schriften beschrieben wurden, wurde bei der vorliegende Erfindung, Kunststoffe mit vielen chemischen Modifikationen eingesetzt. Unter anderem sind verschiedene Zusammensetzungen experimentell eingeflossen, um die zu erzielenden Merkmale, für die Anwendung zu erreichen.
Der elektrische Endwiderstand der Heizplatte wird grammgenau auf seine Volumenmenge und somit auch auf die spätere Größe und Leistung berechnet und fließt dann auch so in den Fertigungsprozess (Spritzguss-Technik) mit ein.

SMC-Materialien und z.B. PP-Kunststoffe sind in ihrer Wirkungsweise, Produktion und Funktion natürlich bekannt und werden in sehr hohem Maße industriell gefertigt und eingesetzt.
Für den vorliegenden Einsatzfall einlegbare Heizplatten die in den unterschiedlichsten Baugruppen, Konstruktionen, Gerätschaften, dabei insbesondere in ein "heizbares Serviertablett" kontaktierbar und zu integrieren sind.

Weitere Ausgestaltungen für die vorliegende Erfindung ist, eine Möglichkeit zu schaffen, damit durch Anbringen eines Akkus an das Tablett, die Essenszeiten verlängert, bzw. auch außerhalb der normalen Essenszeiten, eine fortwährende Funktion des Serviertabletts und somit ein längeres Warmhalten gewährleistet werden kann.

Mit einem Akku kann das Tablett auch außerhalb der normalen Essenszeiten verwendet werden. Wobei durch die spezielle Konstruktion und Aufbau der einlegbaren Heizplatten, die Spannungen von 12 Volt bis 42 Volt frei wählbar sind, sowie die gewünschten Temperaturbereiche in den Heizzonen geregelt werden können.

Die Akkumulatoren können wahlweise zusammen mit dem heizbaren Tablett oder getrennt in einer Docking - Station aufgeladen werden. Die Docking-Station ist so ausgebildet, dass mehrere oder auch einzelne Akkus aufgeladen werden können. Für den Betrieb außerhalb von Krankenhäusern, Alten und Pflegeheimen usw. (z.B Essen auf Rädern) wird der Akku am Tablett mit einer speziellen Einzelladestation versorgt.

Die Ansteuerung der Akkus so zu konzipieren, dass auch in dieser Betriebsart die im Tablett eingearbeiteten Heizzonen untereinander abschaltbar und die zu erzielenden Temperaturen, für verschiedene Speisen, wählbar sind. Über eine LED - Anzeige am Akku kann der Ladezustand der Akkus abgefragt werden. Auch sind natürlich alle sicherheitsrelevanten Punkte der entsprechenden Normen, was die Akkus betrifft berücksichtigt. Alle Bedienelemente, Schaltelemente, Platinen und Softwarebausteine zum ändern von Temperaturen, Heizzonen oder Betriebszeitvorgaben sind im Akkugehäuse untergebracht.

### Bezugszeichenliste:

### für Anmeldung: auswechselbare - u. einlegbare Widerstands-Heizplatten

### Fig. 1 bis Fig. 8

- 1: Tablett-Korpus, (Oberteil- zweischaliges Serviertablett)
- 2: einlegbare Heizplatten, aus leitfähigem Kunststoff (Spezial-Compound)
- 3: O-Ring als Dicht u. Ausgleichsring
- 4: Kontakt-Enden (Steuerdraht, Datentransfer, Temperaturregelung und Sensoren)
- 5: Federkontakt für Spannungsversorgung (für 230 V und 12 V bis 48 V)
- 6: Scheiben-Kontaktplatte 1
- 7: Scheiben-Kontaktplatte 2
- 8: Anschlussdraht-Steuerdraht
- 9: Versorgungsdraht (von Scheiben-Kontakten)
- 10: Verbindungsnocken
- 11: Aufwulstung (an Innenseite vom Oberteil- zweischaliges Serviertablett)
- 12: nicht besetzt
- 13: Antennenspule (RFID)
- 14: Chip mit Transponder (RFID)
- 15: Heizelementeinlage (aus Az. 10 2014 108 553.1)
- 16: Bajonettzunge
- 17: Versorgungsdraht (von Kontakten - Heizelementeinlage
- 18: Isolationsplatte, einlegbar
- 19: Ringkontaktleiste
- 20: Tablettrand
- 21: Aufwulstung am unteren Tablettkorpus - gepresstes SMC-Tablett
- 22: Tablettkorpus - gepresstes SMC-Tablett
- 23: beheizte Tablettaufstellfläche
- 24: Aufstellfüße
- 25: Kontaktplatte
- 26: Einlegekammer
- 27: einlegbare Heizplatten, aus mehrfach gepresstem SMC-Material
- 28: einlegbare Heizplatten, aus polymeren Phasenwechselmaterialien (PCM) als Latentwärmespeicher
- 29: einlegbare Heizplatten, aus mehrfach gepresstem SMC-Material, jedoch in NANO-Technik (Carbon-Nano Tubes - CNT)
- 30: direkte Heizflächen der Heizplatte
- 31: zusätzliche Dichtlippen
- 32: Stütz u. Führungsring
- 33: axial angeordneter O-Ring
- 34: Gegenkontaktplättchen
- 35: Seitenwand-Tablett

## Patentansprüche

1. Widerstands-Heizplatten nach Anspruch 1, **dadurch gekennzeichnet, dass** die Heizplatte (7) als Träger zum größten Teil (ca. 70%-83%) aus leitfähigem Kunststoff, Kunstharz, GFK, sowie sonstigen gefüllten Polymere bestehen und die Platten einen festen Körper bilden und in den verschiedensten Konstruktionen, Baugruppen und Gerätschaften, insbesondere in Servier-Tabletts Verwendung finden, integrierbar sind.

2. dass die Anschlüsse im Tablettkorpus am Umfang der Zentrierung für die Heizplatten schon mit eingespritzt (beim Spritzguss) oder mit eingezogen (beim Tiefziehen) werden und sowohl für Netzspannung bis 230 Volt als auch Niedervoltspannung bis 48 Volt verwendet werden kann. Das gilt auch für die Kontakte, die für Datenübertragung usw., benötigt werden.

3. einlegbare Widerstands-Heizplatte nach Anspruch 1, **dadurch gekennzeichnet dass**, die Heizplatte aus einem leitfähigen Spezial-Compound-Kunststoff die im Spritzgussverfahren hergestellt wird, sowohl eine Heizplatte mit innenliegendem Heizelement (aus Az. 10 2014 108 553.1) und mehrschichtigem gepresstem SMC-Material als Sandwich im Press-Verfahren, wobei alle relevanten Bauteile wie z.B. Kontakte, Schaltelemente, Sensoren, RFID-System usw. bei den Fertigungsprozessen schon eingearbeitet sind.

4. einlegbare Widerstands-Heizplatte nach Anspruch 1, **dadurch gekennzeichnet dass**, das die Tabletts mit RFID-Technik (Abk. für Radio Frequency Identification) versehen sind, d.h. dass der Transponder mit allen notwendigen Anschlüssen in der Heizplatte mit eingespritzt odereingepresst ist, um die Identifikation beliebiger Objekte in logistischen Prozessen sowie die Verknüpfung von Informationen mit diesen Objekten zur Beschleunigung und zur Verbesserung der Logistikprozesse. Das Gesamtsystem besteht aus Transponder, der drahtlosen Schnittstelle, einer Basisstation zur Identifikation und einer IT-Anbindung.

5. einlegbare Widerstands-Heizplatte nach Anspruch 1, **dadurch gekennzeichnet dass**, die Möglichkeit einer kompletten Fertigung aus polymeren Phasenwechselmaterialien, für eine Heizplatte, in Verbindung mit einer Heizeinlage (aus Az. 10 2014 108 553.1, auf die Bezug genommen wird), als sogenannte externe Heizquelle, die in ein Serviertablett unterseitig in den Aufwulstungen des Korpus, einlegbare und durch Bajonett oder Klickverschluss zu befestigen, integriert ist und somit als Latent-Wärme-Element zum Einsatz kommt, geschaffen werden. Wobei es unerheblich ist, ob das Serviertablett mit Netz- oder Schutz-Kleinspannung betrieben wird.

6. einlegbare Widerstands-Heizplatte nach Anspruch 1, **dadurch gekennzeichnet, dass** die Wirkungsweise eine PTC-ähnliche Charakteristik aufweist.

7. einlegbare Widerstands-Heizplatte nach Anspruch 1, **dadurch gekennzeichnet, dass** Kühlelemente in einer Kombination aus Peltier- ähnliche Charakteristik / Wärmetauschverfahren, Heatpipes bzw. ähnl. ausgeführt sind und auch in den Aufnahmen/Aufwulstungen (für die Heizplatten) ausgetauscht bzw. auswechselbar und ebenfalls mit Bajonett oder Klickverschlüssen fixiert und arretiert werden.

8. einlegbare Widerstands-Heizplatte nach Anspruch 1, **dadurch gekennzeichnet dass**, die Heizplatte in Nano-Technik, sowohl auch als Latent-Wärmespeicher ausgeführt ist.

9. einlegbare Widerstands-Heizplatte nach Anspruch 1, **dadurch gekennzeichnet dass**, die Heizelemente, als Scheiben oder als Freiformplatten ausgebildet sind und mit Bajonett oder KlickVerschlüssen versehen und in den an der Unterseite des Tablett-Korpus, (bei der Version aus mehrschichtigem gepresstem SMC-Material) befindlichen Aufwulstungen, eingelegt und fixiert werden.

10. einlegbare Widerstands-Heizplatte nach Anspruch 1, **dadurch gekennzeichnet dass**, an die Servier-Tabletts ein externer Akku adaptierbar ist und mit den gleichen Versorgungsanschlüssen wie für die Heizplatten, betrieben wird, wobei ein Spannungsbereich im Niedervoltbereich 12 V bis 48 V wählbar ist.

11. einlegbare Widerstands-Heizplatte nach Anspruch 1, **dadurch gekennzeichnet dass**, die Heizelemente, in ihrer Heizzonenfläche über autom. Temperaturreglung veränderbar ist.

12. einlegbare Widerstands-Heizplatte nach Anspruch 1, **dadurch gekennzeichnet, dass** an der Unterseite des Tabletts Aufwulstungen (Fig. 3) zur Aufnahme der Bajonett oder Klickverschlüsse aufweist und die Tabletts trotzdem stapelbar sind.
